(19) Europäisches Patentamt
European Patent Office
Office européen des brevets

(11) EP 0 803 349 A2

(12) **EUROPEAN PATENT APPLICATION**

(43) Date of publication:
**29.10.1997 Bulletin 1997/44**

(51) Int Cl.[6]: **B32B 27/10**, B65D 65/40

(21) Application number: **97302807.9**

(22) Date of filing: **24.04.1997**

(84) Designated Contracting States:
**DE NL**

(30) Priority: **25.04.1996 JP 105594/96**
**31.05.1996 JP 160589/96**
**03.04.1997 JP 85373/97**

(71) Applicant: **KUREHA KAGAKU KOGYO KABUSHIKI KAISHA**
**Tokyo 103 (JP)**

(72) Inventors:
- **Tanaka, Hideaki**
**Tamari-Mura, Niihari-gun, Ibaraki 311-34 (JP)**
- **Oba, Hiroyuka**
**Tamari-Mura, Niihari-gun, Ibaraki 311-34 (JP)**
- **Sato, Tamoaki**
**Tamari-Mura, Niihari-gun, Ibaraki 311-34 (JP)**
- **Hasegawa, Tomohisa**
**Tamari-Mura, Niihari-gun, Ibaraki 311-34 (JP)**

(74) Representative:
**Baverstock, Michael George Douglas et al**
**BOULT WADE TENNANT,**
**27 Furnival Street**
**London EC4A 1PQ (GB)**

(54) **Resin laminated paper and packaging container using the same**

(57) A resin-laminated paper, comprising at least a paper material; and a hardly hot water-soluble resin layer disposed on at least one side of the paper material;

wherein the hardly hot water-soluble resin layer comprises the following Resin A and/or Resin B:

Resin A: a resin mainly comprising at least one poly (meth)acrylic acid type polymer selected from a poly (meth)acrylic acid and a partially neutralized product thereof; and a poly-alcohol type polymer;
Resin B: a resin mainly comprising a poly (meth) acrylic acid and a poly-alcohol type polymer, and further containing a metal in at least a portion thereof.

***Fig.1***

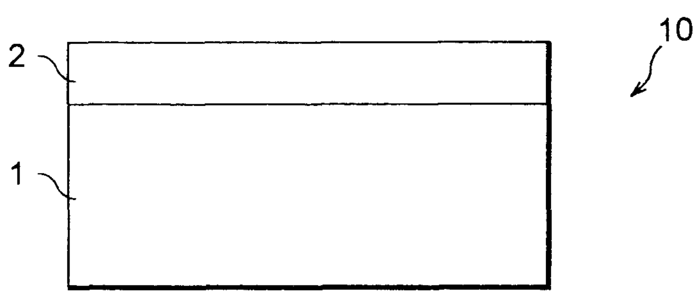


EP 0 803 349 A2

## Description

The present invention relates to a laminated paper (resin-laminated paper or resin-bonded paper) comprising at least a paper material and a resin layer having an excellent oxygen barrier property, and a packaging (or storing) container which has been formed by using such a laminated paper.

More specifically, the present invention relates to a packaging material or packaging container which uses paper as a base material, and is suitably usable for sealed packaging of foods, including liquid foods or drinks such as milk, and foods, which can easily deteriorate in quality, such as alcoholic drinks inclusive of wine, and Japanese liquor (sake) ; miso (soybean paste), and liquid seasonings inclusive of soy sauce and clear soup.

Heretofore, as packaging materials which use paper as a base material for the purpose of storing or containing a liquid food such as milk, there have been known a packaging material (hereinafter, referred to as "packaging material A") comprising a paper material and coating layers of polyethylene resin (PE coating layers) disposed on both sides of the paper material; a packaging material (hereinafter, referred to as "packaging material B") which has further been improved in oxygen barrier property by adopting a layer structure comprising a paper material / adhesive resin layer / ethylene vinyl alcohol copolymer film layer (EVOH film layer) /PE coating layer, on at least one side of the packaging material A; and a packaging material (hereinafter, referred to as "packaging material C") to which a higher oxygen barrier property has been imparted by using an aluminum foil instead of the EVOH film layer in the above packaging material.

In each of the above packaging materials A to C, both of the surface layers of the PE coating layer has a function of ensuring safety for and impermeability to a liquid food, or ensuring the heat sealing property at the time of the formation of the packaging container.

However, in recent years, packaging materials are required to have a higher oxygen barrier performance, and therefore, the number of cases wherein the above-mentioned conventional packaging material A and packaging material B cannot fully satisfy such a requirement has increased. Further, unlike the case of metal cans and plastic bottles, a container which has been formed by using a packaging material utilizing paper as a base material has a problem such that the container is deformed due to insufficient strength or tenacity (or nerve) of the paper, when the container is filled with certain contents, particularly liquids.

On the other hand, the above-mentioned packaging material C including an aluminum foil shows a sufficient performance in view of its oxygen barrier performance. However, when the packaging material C is subjected to disposal by incineration, the melted aluminum still remains in the incinerator as an incineration residue, and therefore there is a serious problem that the incineration disposal cannot be conducted efficiently.

Further, in the case of the packaging material C including an aluminum foil, it is difficult to heat its contents by means of a microwave oven. Further, it is also difficult to detect foreign matter mixed in the contents by using a metal detector, in the inspection step in an automated production line for producing food.

An object of the present invention is to provide a packaging material or packaging container which solves the above-mentioned problems encountered in the prior art.

Another object of the present invention is to provide a packaging material or packaging container which has an appropriate strength while using a paper material, and is one to which can be provided with a high oxygen barrier property which is comparable (or substantially equivalent) to that of a packaging material or packaging container using an aluminum foil.

A further object of the present invention is to provide a packaging material or packaging container which can easily be subjected to incineration disposal, and further enables the utilization of a microwave oven in heating its contents, and the utilization of a metal detector in the detection of foreign matter in the contents.

As a result of earnest study, the present inventors have found that the provision of a layer comprising a specific hardly (or scarcely) hot water-soluble resin (i.e., a resin which is hardly soluble in hot water) on at least one side of a paper material not only imparts an appropriate strength to the paper material, but also provides a packaging material or packaging container having a high oxygen barrier property which is comparable to that of an aluminum foil.

The resin-laminated paper according to the present invention is based on the above discovery, and comprises: at least a paper material; and a hardly hot water-soluble resin layer disposed on at least one side of the paper material; wherein the hardly hot water-soluble resin layer comprises the following Resin A and/or Resin B:

Resin A: a resin mainly comprising at least one poly (meth)acrylic acid type polymer selected from a poly (meth) acrylic acid and a partially neutralized product thereof; and a poly-alcohol type polymer;
Resin B: a resin mainly comprising a poly (meth)acrylic acid and a poly-alcohol type polymer, and further containing a metal in at least a portion thereof.

The present invention will be more fully understood from the detailed description given hereinbelow and the accompanying drawings, which are given by way of illustration only and are not to be considered as limiting the present

invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will be apparent to those skilled in the art from this detailed description.

In the drawings:

Fig. 1 is a schematic sectional view showing an embodiment of the resin-laminated paper according to the present invention which comprises a paper material 1 and a hardly hot water-soluble resin layer 2 disposed on one side thereof.

Fig. 2 is a schematic sectional view showing another embodiment of the resin-laminated paper according to the present invention which comprises a paper material 1 and a hardly hot water-soluble resin layer 2 disposed on one side thereof through the medium of an adhesive resin layer 3.

Fig. 3 is a schematic sectional view showing a further embodiment of the resin-laminated paper according to the present invention which further comprises a thermoplastic resin layer 4 having a high melting point/high softening point disposed on the hardly hot water-soluble resin layer 2 side of the resin-laminated paper shown in Fig. 2.

Fig. 4 is a schematic sectional view showing an embodiment of the resin-laminated paper according to the present invention which further comprises a surface resin layer 5 disposed on both of the hardly hot water-soluble resin layer 2 side and the paper material 1 side of the resin-laminated paper shown in Fig. 1

Fig. 5 is a schematic sectional view showing an embodiment of the resin-laminated paper according to the present invention which further comprises a surface resin layer 5 disposed on both of the hardly hot water-soluble resin layer 2 side and the paper material 1 side of the resin-laminated paper shown in Fig. 2.

Fig. 6 is a schematic sectional view showing an embodiment of the resin-laminated paper according to the present invention which further comprises a surface resin layer 5 disposed on both of the high-melting point/high softening point resin layer 4 side and the paper material 1 side of the resin-laminated paper shown in Fig. 3.

Fig. 7 is a schematic sectional view showing a further embodiment of the resin-laminated paper according to the present invention which comprises a paper material 1, and a hardly hot water-soluble resin layer 2 and a surface resin layer 5 disposed on both sides of the paper material 1

Fig. 8 is a schematic sectional view showing a further embodiment of the resin-laminated paper according to the present invention which comprises a paper material 1, and an adhesive resin layer 3, a hardly hot water-soluble resin layer 2 and a surface resin layer 5 disposed on both sides of the paper material 1.

Fig. 9 is a schematic sectional view showing a further embodiment of the resin-laminated paper according to the present invention which comprises a paper material 1, and an adhesive resin layer 3, a hardly hot water-soluble resin layer 2, a high-melting point/high-softening point resin layer 4, and a surface resin layer 5 disposed on both sides of the paper material 1

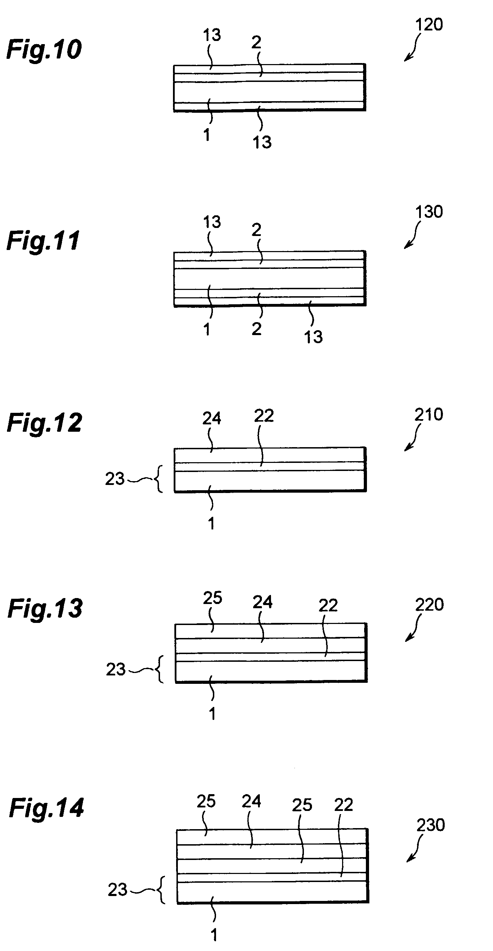

Fig. 10 is a schematic sectional view showing a further embodiment of the resin-laminated paper according to the present invention which further comprises a thermoplastic resin layer 13 disposed on both of the hardly hot water-soluble resin layer 2 side and the paper material 1 side of the resin-laminated paper shown in Fig. 1

Fig. 11 is a schematic sectional view showing a further embodiment of the resin-laminated paper according to the present invention which comprises a paper material 1, and a hardly hot water-soluble resin layer 2 and a thermoplastic resin layer 13 disposed on both sides of the paper material 1

Fig. 12 is a schematic sectional view showing a further embodiment of the resin-laminated paper according to the present invention which comprises a base material layer 23 including a paper material 1 and an adhesive resin layer 22 disposed on one surface side thereof; and a hardly hot water-soluble resin layer 24 disposed on the surface of the adhesive resin layer 22 of the base material layer 23 .

Fig. 13 is a schematic sectional view showing a further embodiment of the resin-laminated paper according to the present invention which comprises the resin-laminated paper shown in Fig. 12, and a thermoplastic resin layer 25 disposed on one surface thereof, i.e., a laminated paper which comprises a base material layer 23 including a paper material 1 and an adhesive resin layer 22 disposed on one surface side thereof; a hardly hot water-soluble resin layer 24 disposed on the surface of the adhesive resin layer 22 of the base material layer 23, and the thermoplastic resin layer 25 disposed on the surface of the hardly hot water-soluble resin layer 24.

Fig. 14 is a schematic sectional view showing a further embodiment of the resin-laminated paper according to the present invention which comprises a base material layer 23 including a paper material 1 and an adhesive resin layer 22 disposed on one surface side thereof; a thermoplastic resin layer 25 disposed on the surface of the adhesive resin layer 22 of the base material layer 23, a hardly hot water-soluble resin layer 24 disposed on the surface of the thermoplastic resin layer 25, and a thermoplastic resin layer 25 disposed on the surface of the hardly hot water-soluble resin layer 24.

Hereinbelow, the present invention will be described in detail with reference to the accompanying drawings, as desired.

(Resin-laminated paper)

Referring to Fig. 1 which is a schematic sectional view showing a first embodiment of the present invention, the resin-laminated paper 10 in this embodiment comprises: a paper material 1 and a layer 2 of a hardly hot water-soluble resin disposed on at least one side of the paper material 1 (i.e., the hardly hot water-soluble resin layer 2 is disposed on at least one surface of the paper material 1 so that the hardly hot water-soluble resin layer 2 contacts at least one surface of the paper material 1).

Referring to Fig. 2 which is a schematic sectional view showing a second embodiment of the present invention, the resin-laminated paper 20 in this embodiment comprises: a paper material 1 and a hardly hot water-soluble resin layer 2 disposed on at least one side of the paper material 1 through the medium of an adhesive resin layer 3 (i.e., the paper material 1 does not directly contact the hardly hot water-soluble resin layer 2). The second embodiment has an advantage that the hardly hot water-soluble resin layer 2 to be formed may be caused to have a higher smoothness, and therefore the hardly hot water-soluble resin layer 2 to be formed may be caused to exhibit its oxygen barrier property more effectively.

Referring to Fig. 3 which is a schematic sectional view showing a third embodiment of the present invention, the resin-laminated paper 30 in this embodiment comprises: a paper material 1, a hardly hot water-soluble resin layer 2 disposed on at least one side of the paper material 1 through the medium of an adhesive resin layer 3, and a thermoplastic resin layer 4 having a crystal melting point or Vicat softening point of 160 °C or higher disposed on the surface of the hardly hot water-soluble resin layer 2. The third embodiment has an advantage that the hardly hot water-soluble resin layer 2 to be formed may be caused to have a higher smoothness, and therefore the hardly hot water-soluble resin layer 2 to be formed may be caused to exhibit its oxygen barrier property more effectively. Further, at the time of heat-treatment in the formation of the hardly hot water-soluble resin layer 2, it is possible to effectively prevent a decrease in the smoothness of the hardly hot water-soluble resin layer 2.

(Paper material)

The paper material usable in the present invention is not particularly limited, but can appropriately be selected from paper materials known in the art in accordance with the intended usage of the resin-laminated paper to be formed. Specific examples of such a paper material may include: e.g., wood pulp paper, rayon paper, synthetic pulp paper, and synthetic paper. Among these, it is particularly preferred to use wood pulp paper in view of the matching of the paper material with the hardly hot water-soluble resin.

Specific examples of such wood pulp paper may include those which have heretofore been used as a base material for lamination, such as: wood-free paper, kraft paper, white board paper, and tissue paper (glassine paper). In view of the coating property in the process for forming the hardly hot water-soluble resin, it is preferred to use a paper material the surface of which has been subjected to a smoothness-imparting treatment by using a resin containing a pigment or colorant such as kaolin.

In the present invention, in view of the strength or formability to be fabricated into a packaging container, the paper material may generally be one having a basis weight of about 10 - 500 g/m$^2$, more preferably 50 - 500 g/m$^2$.

(Hardly hot water-soluble resin)

The resin layer constituting the resin-laminated paper according to the present invention together with the above-mentioned paper material comprises a hardly hot water-soluble resin. In the present invention, the "hardly hot water-soluble resin" refers to a resin such that, when 1g of a film-like product comprising the resin is charged into 500 ml of water at 90 °C and is immersed therein for ten minutes, and then the resultant insoluble matter (residue) is collected and dried, the insoluble matter in an amount of 80 mass % or more (preferably, 85 mass % or more) of the mass of the original resin is collected.

In the present invention, the above-mentioned hardly hot water-soluble resin layer is a resin layer comprising the following Resin A and/or B.

Resin A: a resin comprising, as a main component, at least one kind of poly (meth)acrylic acid type polymer selected from poly (meth)acrylic acid and partially neutralized products thereof; and a poly-alcohol type polymer.

In view of the gas barrier property and the hardly hot water-soluble property, the "Resin A" may preferably be selected from resins at least having the following chemical structure 1, (C), (D) and/or (E).

## *CHEMICAL STRUCTURE 1*

chemical structure (C) :

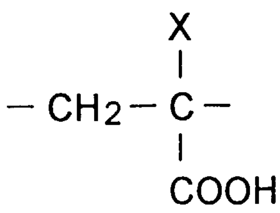

(X denotes H or $CH_3$)

chemical structure (D) :

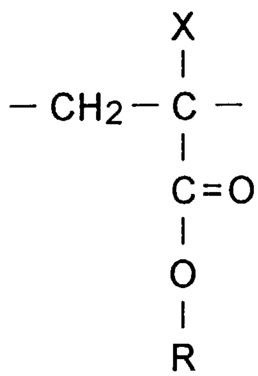

(X denotes H or $CH_3$, and R denotes a residue of a polyalcohol-type polymer from which a hydrogen atom is removed)

chemical structure (E) :

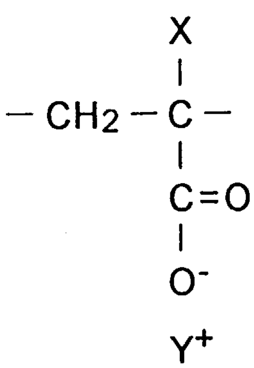

(X denotes H or $CH_3$, Y denotes an alkali metal ion or ammonium ion)

Further, in view of the gas barrier property and the hardly hot water-soluble property, the "Resin A" may preferably be one having an esterification degree (or degree of esterification) defined by the following equation (1) which satisfies the relationship 0.01≦ (esterification degree) ≦ 0.5 more preferably, 0.05 ≦ (esterification degree) ≦ 0.5 particularly preferably, 0.1 ≦ (esterification degree) ≦ 0.4.

(Equation 1) (Esterification degree) = d /(c + d + e),

wherein "c", "d" and "e" respectively denote the molar fractions of the above chemical structures (C), (D) and (E) in the resin.

The above-mentioned "Resin B" is a resin comprising, as a main component, a poly (meth)acrylic acid, a poly-alcohol type polymer, and a metal component. With a view to the gas barrier property, the "Resin B" may preferably be a hardly hot water-soluble resin having at least the following chemical structures 2 (C ') ,( D') and (E ').

Further, with a view to the gas barrier property, the "Resin B" may preferably be a hardly hot water-soluble resin having an esterification degree, and an ionization degree respectively defined by the following equations (2) and (3), which satisfy a relationship of:

$$0.01 \leqq \text{(esterification degree)} \leqq 0.5,$$

$$0.01 \leqq \text{(ionization degree)} \leqq 0.9 ,$$

more preferably,

$$0.05 \leqq \text{(esterification degree)} \leqq 0.5,$$

$$0.1 \leqq \text{(ionization degree)} \leqq 0.9,$$

particularly preferably,

$$0.1 \leqq \text{(esterification degree)} \leqq 0.4,$$

$$0.2 \leqq \text{(ionization degree)} \leqq 0.7.$$

## CHEMICAL STRUCTURE 2

chemical structure (C'):

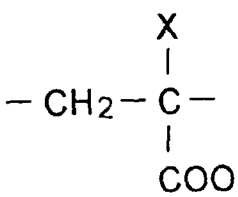

(X denotes H or $CH_3$)

chemical structure (D'):

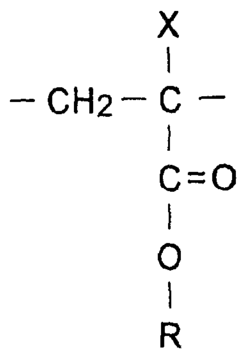

(X denotes H or $CH_3$, and R denotes a residue of polyalcohol-type polymer from which a hydrogen atom is removed)

chemical structure (E'):

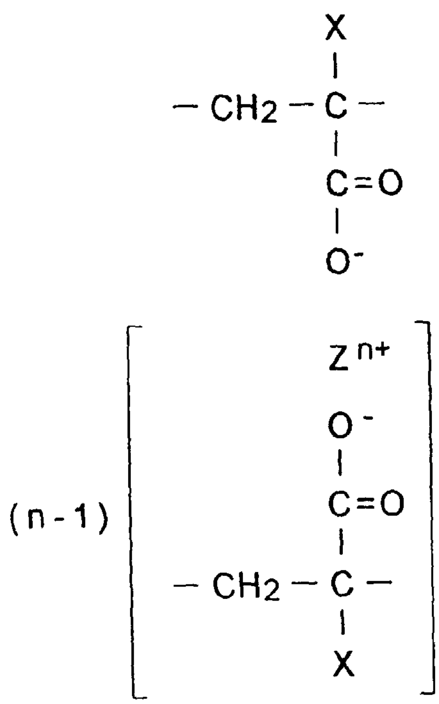

(X denotes H or $CH_3$, $Z^{n+}$ denotes a metal ion having a valence of "n" ⟨n is a positive integer of 2 or more⟩ or more)

(Equation 2) (esterification degree) = $d'/(c' + d' + n \times e')$,

(Equation 3 ) (ionization degree) = n × e'/(c' + d' + n×e'),

wherein "c "d'" and "e'" respectively denote molar fractions of the above chemical structures (C'), (D') and (E') in the resin.

The above-mentioned esterification degree and ionization degree are measured by using an infrared absorption spectrometry as described hereinafter, with respect to a surface layer portion of the resin layer 2. Therefore, in the present invention, it is sufficient that at least a portion of the resin layer 2, i.e., at least a surface layer potion thereof, exhibits the above-mentioned preferred esterification degree and ionization degree (in other words, it is not necessary that the interior of the resin layer 2 exhibits the above-mentioned preferred esterification degree and ionization degree).

Specific examples of the poly (meth)acrylic acid, partially neutralized products thereof, and the poly-alcohol type polymer, which are main components of the Resin A and Resin B constituting the hardly hot water-soluble resin layer, and are starting materials for providing the Resin A and Resin B, may include those as described below.

Poly (meth)acrylic acid:

The poly (meth)acrylic acid is a compound having two or more carboxyl groups in one molecule thereof. Specific examples thereof may include polyacrylic acid, polymethacrylic acid, copolymers of acrylic acid and methacrylic acid, and mixtures of these polymers. The molecular weight of the poly (meth)acrylic acid type polymer is not particularly limited, but one having a number-average molecular weight in the range of 2,000-4,000,000 (more preferably, 5,000 - 1,000,000) is suitably usable, with a view to the coating property of a coating solution at the time of the formation of the hardly hot water-soluble resin comprising the Resin A as described hereinafter.

Poly (meth)acrylic acid partially neutralized product:

The poly (meth)acrylic acid partially neutralized products may be obtained, e.g., by appropriately neutralizing the above-mentioned poly (meth)acrylic acid by use of an appropriate alkali such as an alkali metal compound inclusive of sodium hydroxide and potassium hydroxide, and ammonia aqueous solution. With a view to productivity at the time of the formation of the hardly hot water-soluble resin layer comprising the Resin A as described hereinafter, the neutralization degree of the poly (meth)acrylic acid partially neutralized product may preferably be more than 0 (zero) and not more than 20 % (more preferably, more than 0 and not more than 18 %, particularly preferably, not less than 1% and not more than 15 %). The "neutralization degree" used herein may be determined by the following equation.

Neutralization degree = (A/B) × 100 (%),

A: moles of the neutralized carboxyl groups contained in 1 (one) g of the partially neutralized poly (meth)acrylic acid.

B: moles of the total carboxyl groups before the partial neutralization contained in 1 g of the poly (meth)acrylic acid to be partially neutralized.

With respect to the acrylic acid, the above-mentioned "moles of carboxyl groups" is determined by calculating the moles thereof on the basis of the mass of the acrylic acid-type polymer and the molecular weight (72 g/mol) of an acrylic acid monomer unit. With respect to the methacrylic acid, the above-mentioned "moles of carboxyl groups" is determined by calculating the moles thereof on the basis of the mass of the methacrylic acid-type polymer and the molecular weight (86 g/mol) of a methacrylic acid monomer unit.

Poly-alcohol type polymer:

The poly-alcohol type polymer is a compound having two or more hydroxyl groups in one molecule thereof. Specific examples of the poly-alcohol type polymer may include polyvinyl alcohol and saccharides (or sugars).

As the polyvinyl alcohol, it is possible to use those known in the art. However, with a view to the provision of a preferred oxygen barrier property in combination with the poly (meth)acrylic acid type polymer, it is generally preferred to use a polyvinyl alcohol having a saponification degree of 95 % and an average polymerization degree in the range of 300 - 2500.

On the other hand, specific examples of the above-mentioned "saccharide" may include monosaccharides, oligosaccharides, polysaccharides, sugar alcohols which may be obtained by converting the reducing terminal group thereof into an alcoholic group, and further, products which may be obtained by chemically modifying each of the above-mentioned compounds. Further, similarly to the case of the polyvinyl alcohol, with a view to the provision of a preferred oxygen barrier property in combination with the poly (meth)acrylic acid type polymer, it is preferred to use malto-oligosaccharide, water-soluble starch, sugar alcohols thereof, sorbitol, dextrin or pullulan.

The composition ratio (mass ratio) between the poly (meth)acrylic acid type polymer selected from the poly (meth) acrylic acid, and poly (meth)acrylic acid partially neutralized product; and the poly-alcohol type polymer, which are used at the time of the provision of the Resin A and B, may preferably be in the range of (poly (meth)acrylic acid type polymer) : (poly-alcohol type polymer) = 95:5 to 10:90. The composition ratio may more preferably be in the range of (poly (meth)acrylic acid type polymer) :

(poly-alcohol type polymer) = 90:10 to 20:80,
particularly preferably, in the range of (poly (meth)acrylic acid type polymer) : (poly-alcohol type polymer) = 90:10 to 40:60.

(Process for forming resin-laminated paper)

The process for forming the resin-laminated paper according to the present invention is not particularly limited as long as it can form a layer of hardly hot water-soluble resin on at least one side of the paper material. Preferred examples of the process for forming a layer comprising the hardly hot water-soluble resin are those as described below, depending on the embodiment of the resin-laminated paper, and the resin (A and/or B) to be used for forming the hardly hot water-soluble resin layer.

(Production process of the first embodiment)

Hereinbelow, there is described a first embodiment of the present invention, which is a preferred embodiment for forming each resin of those used in the case of the resin-laminated paper shown by Fig. 1

[Process for forming Resin A]

Referring to Fig. 1, on at least one side of a paper material 1 (i.e., on at least one surface of the paper material), a resin solution which comprises at least one polymer (polyacrylic acid type polymer) selected from poly (meth)acrylic acid and poly (meth)acrylic acid partially neutralized product (e.g., polyacrylic acid partially neutralized product); and a poly-alcohol type polymer (e.g., starch) (preferably, a solution which has been obtained by dissolving the above polyacrylic acid type polymer and poly-alcohol type polymer in a solvent such as water and water/alcohol mixed liquid) is applied, then the solvent is removed, and thereafter the resultant laminated product is heat-treated (preferably, at 160 °C or higher, more preferably, at about 200 °C) thereby to form the resin layer 2.

When the resin layer 2 comprising the polyacrylic acid type polymer and poly-alcohol type polymer which has been formed by applying a solution onto the paper material is heat-treated, a crosslinking structure due to an ester bond is formed between the carboxyl group in the polyacrylic acid type polymer and the hydroxyl group in the poly-alcohol type polymer so that the resultant polymer becomes insoluble in water, and is converted into a resin layer 2 having an oxygen barrier property.

In order to form the above crosslinking structure more rapidly, and to easily realize a higher productivity, it is preferred to use a partially neutralized product of the polyacrylic acid type polymer, as the polyacrylic acid type polymer which is a starting material for obtaining the Resin A.

Further, it is also possible to add a catalyst or accelerant for an esterification reaction to the above resin solution comprising the polyacrylic acid type polymer and the poly-alcohol type polymer. Specific examples of the esterification reaction catalyst may include: phosphoric acid, phosphorous acid, hypophosphorous acid, alkali metal salts of these acids (e.g., sodium hypophosphite), and alkaline earth metal salts of these acids.

[Process for forming Resin B]

On at least one side of a paper material 1 (i.e., on at least one surface of the paper material), a hardly hot water-soluble resin layer comprising the Resin A is formed in the same manner as in the above-mentioned process for forming Resin A, then, free carboxyl groups (i.e., those not contributing to an ester bond) originating from the polyacrylic acid type polymer in the hardly hot water-soluble resin layer 2 comprising the Resin A are subjected to ion-crosslinking by using a metal ion of 2 having a valence of two or more (i.e., divalent, trivalent, tetravalent ...), so that the oxygen barrier property of the hardly hot water-soluble resin layer 2 may further be improved.

The Resin B is a resin which has the above ion-crosslinking structure due to metal ions having a valence of two or more which has been provided by the above procedure, in addition to the crosslinking structure due to the ester bond in the Resin A. By the above formation of the ion-crosslinking structure, the Resin B may be formed on at least one side of the paper material 1.

(Process for forming ion-crosslinking )

As a specific process for ion-crosslinking free carboxyl groups (i.e., those not contributing to an ester bond) originating from the polyacrylic acid type polymer in the hardly hot water-soluble resin layer 2 comprising the Resin A, it is preferred to use a method wherein a paper material on which the hardly hot water-soluble resin layer comprising Resin A has been formed is immersed in water containing a metal capable of providing a metal ion having a valence

of two or more (e.g., magnesium, calcium, aluminum or zinc ), and then is heated. The process for forming the above ion-crosslinking structure is not particularly limited, as long as it provides the above-mentioned preferred esterification degree and ionization degree.

More specifically, for example, it is possible to form ion-crosslinking due to magnesium ions in the hardly hot water-soluble resin comprising the Resin A by immersing the hardly hot water-soluble resin comprising the Resin A in water containing magnesium hydroxide in an amount of 1 g /1000 ml, and heating the resin.

Thus, in the case of the resin-laminated paper shown by Fig. 1 according to the first embodiment of the present invention, a resin solution comprising the polyacrylic acid type polymer and the poly-alcohol type polymer is directly applied onto the paper material 1 and then heat-treated, and therefore an appropriate strength may be imparted to the paper material.

According to the present inventors' findings and knowledge, it is presumed that the reason for the provision of an appropriate strength to the paper material 1 in the above-mentioned manner is that the hardly hot water-soluble resin assumes the crosslinking structure so as to increase the coefficient of elasticity thereof and to impart strength to the paper; and/or that the starting material for the hardly hot water-soluble resin is water-soluble, and therefore when such a material is directly applied onto the paper material, the hardly hot water-soluble resin is formed in a state such that the resin penetrates between fibers constituting the paper material so as to impart strength to the paper material more effectively.

(Process for forming second embodiment)

Hereinbelow, there is described a process for forming the respective resins in the case of the second embodiment of the present invention, i.e., the resin-laminated paper shown by Fig. 2.

[Process for forming Resin A, B]

Referring to Fig. 2, on at least one side of a paper material 1 (i.e., on at least one surface of the paper material), an adhesive resin layer 3 is formed, and further, on the surface of the adhesive resin layer 3, a layer comprising the Resin A, B is formed in the same manner as in the above-mentioned case of the first embodiment of the present invention.

For the adhesive resin layer 3, it is possible to use an adhesive resin known in the art without particular limitation. Specific examples of such a resin may include thermoplastic resins such as polyolefin type resins and acid-modified polyolefin type resins; thermosetting resins such as epoxy type resins, urethane type resins, and polyester type resins.

At the time of the formation of the adhesive resin layer, it is possible to use a known method of forming a resin layer without particular limitation. Specific examples thereof may include: an extrusion lamination method in combination with the use of a thermoplastic adhesive resin; and a coating method in combination with the use of a thermosetting resin.

(Process for forming third embodiment)

Hereinbelow, there is described a process for forming the respective resins in the case of the third embodiment of the present invention, i.e., the resin-laminated paper shown by Fig. 3.

[Process for forming Resin A, B]

For example, referring to Fig. 3, on at least one side of a heat-resistant film 4 of a thermoplastic resin having a crystal melting point or Vicat softening point of 160 °C or higher (i.e., on at least one surface of the heat-resistant film), a layer 2 comprising the Resin A, Resin B is formed in the same manner as in the case of the formation of the first embodiment of the present invention. Then, the thus obtained heat-resistant film 4 on which the hardly hot water-soluble resin layer 2 (comprising Resin A or B) has been formed, and a paper material 1 are laminated with each other through the medium of an adhesive resin layer 3 as described in the case of the embodiment of Fig. 2 so that the hardly hot water-soluble resin layer 2 faces the paper material 1 side. The laminating method used herein is not particularly limited, but a dry lamination method may preferably be used with a view to productivity in the laminating process.

With respect to the order or sequence of the lamination, it is also possible to adopt an arrangement wherein the adhesive layer 3 contacts the heat-resistant film 4 (i.e., an order of the paper material 1/ adhesive resin layer 3/ heat-resistant film 4/ hardly hot water-soluble resin layer 2; not shown in the Figs.) in addition to the order as shown by Fig. 3.

The above heat-resistant film 4 is formed from a thermoplastic resin having a crystal melting point or Vicat softening point of 160 °C or higher so that it may be resistant to the heat-treatment condition (160 °C or higher) for forming the resin layer 2 comprising the Resin A and/ or Resin B. The melting point and Vicat softening point may be measured

in accordance with JIS (Japanese Industrial Standard) K-7121 and JIS K-7206, respectively.

The thermoplastic resin constituting the heat-resistant film 4 is not particularly limited, as long as it satisfies the condition for the crystal melting point or Vicat softening point. In view of the adhesive property thereof with the resin layer 2, it is preferred to use a polyester type resin or a polyamide type resin.

As described above, in the case of the second and third embodiments of the present invention, i.e., the resin-laminated paper shown by Figs. 2 and 3, a resin solution comprising the polyacrylic acid type polymer and the poly-alcohol type polymer is applied onto the paper material 1 by the medium of the adhesive layer 3, and then is heat-treated; or alternatively, a resin solution comprising the polyacrylic acid type polymer and the poly-alcohol type polymer is preliminarily applied onto the heat-resistant film 4 comprising a thermoplastic resin and then is heat-treated, thereby to form the hardly hot water-soluble resin layer 2. In such a case, the resultant hardly hot water-soluble resin layer 2 to be formed may be caused to have a higher smoothness. Accordingly, the hardly hot water-soluble resin layer 2 is caused to exhibit its oxygen barrier property more effectively, as compared with that in the case of the first embodiment of the present invention, i.e., the resin-laminated paper 10 shown in Fig. 1

The coating method to be used at the time at which a resin solution comprising the polyacrylic acid type polymer and the poly-alcohol type polymer is applied onto the paper material 1, the paper material 1 on which the adhesive resin layer 3 has been formed, or the heat-resistant film 4, and then is heat-treated; it is preferred to use a coating method known in the art such as gravure roll coating, reverse roll coating, or die coating. Further, as the heat-treating method to be used after the above coating, it is preferred to use a method using a dry heating type-heating oven, infrared oven or floating furnace.

(Esterification degree and ionization degree of hardly hot water-soluble resin layer)

The oxygen barrier performance of the resin-laminated paper according to the present invention is exhibited on the basis of the hardly hot water-soluble resin layer 2 contained in the resin-laminated paper. Further, the oxygen barrier performance and the hardly hot water-soluble property of the hardly hot water-soluble resin layer 2 may also be changed on the basis of the degree or extent of the heat treatment at the time at which the resin solution comprising the polyacrylic acid type polymer and the poly-alcohol type polymer is applied onto the paper material 1, the paper material 1 on which the adhesive resin layer 3 has been formed, or the heat-resistant film 4, and then heat-treated in the process for forming the resin-laminated paper.

When the degree of heat treatment is low, i.e., when the temperature for the heat treatment is low, or the period of time for the heat treatment is short, both the oxygen barrier performance and the hardly hot water-soluble property of the resultant hardly hot water-soluble resin layer 2 (Resin A) may be insufficient. According to the findings and knowledge of the present inventors, it is presumed that the number of crosslinkages or crosslinking bonds through ester bonds to be formed between the polyacrylic acid type polymer and the poly-alcohol type polymer on the basis of the heat treatment is insufficient.

Accordingly, in order to exhibit the oxygen barrier performance of the hardly hot water-soluble resin layer 2 (Resin A), and the resin-laminated paper according to the present invention,more effectively, the esterification degree of the hardly hot water-soluble resin layer (Resin A) defined by the following equation (1) may preferably be one satisfying a relationship of:

$$0.01 \leqq (\text{esterification degree}) \leqq 0.5,$$

more preferably,

$$0.05 \leqq (\text{esterification degree}) \leqq 0.5.$$

On the other hand, as described above, the hardly hot water-soluble resin layer 2 comprising the Resin B may be formed by forming the hardly hot water-soluble resin layer 2 comprising Resin A, and then treating the hardly hot water-soluble resin layer 2 with metal ions. According to the findings and knowledge of the present inventors, it is presumed that free carboxylic acid originating from the polyacrylic acid type polymer contained in the hardly hot water-soluble resin layer 2 is ion-crosslinked with metal ions in the above-mentioned treatment with the metal ions.

On the basis of the formation of the above ion-crosslinked structure in Resin B, the oxygen barrier performance of the hardly hot water-soluble resin layer is exhibited more effectively. Accordingly, in view of the oxygen barrier performance and hardly hot water-soluble property of the hardly hot water-soluble resin layer 2 comprising Resin B, and the resin-laminated paper 10, the esterification degree and the ionization degree of Resin B defined by the following equations (2) and (3), respectively, may be one in the range of:

$$0.01 \leqq \text{(esterification degree)} \leqq 0.5$$

$$0.01 \leqq \text{(ionization degree)} \leqq 0.9,$$

more preferably, in the range of:

$$0.05 \leqq \text{(esterification degree)} \leqq 0.5$$

$$0.1 \leqq \text{(ionization degree)} \leqq 0.9.$$

(Method of evaluating ionization degree)

The ionization degree of the hardly hot water-soluble resin layer according to the present invention may be determined by measuring the infrared absorption spectrum of the hardly hot water-soluble resin layer 2.

<Method of measuring infrared absorption spectra>

This measurement is conducted by using a commercially available Fourier-transform infrared absorption spectrum measuring apparatus (trade name: FT-IR-1710, mfd. by Perkin-Elmer Co.).

Prior to the measurement, a film or resin layer as a sample to be measured is subjected to a pretreatment. First, the sample to be measured is preliminarily left standing in a constant-temperature and constant-humidity bath at a temperature of 30 °C and a relative humidity of 90 % for 24 hours. Then, immediately before the measurement, the sample to be measured is kept in an oven at 105 °C for one hour. The latter treatment is a drying treatment for removing the influence of water contained in the sample to be measured in the measurement of the infrared absorption spectrum.

Further, the former treatment has the following reason. Thus, at the time of the heat treatment to obtain the hardly hot water-soluble resin layer as the sample to be measured, an acid anhydride is formed between carboxyl groups contained in the polyacrylic acid type polymer as a main starting material for the hardly hot water-soluble resin layer. The absorption spectrum of the C=0 stretching vibration of the carbonyl carbon of the thus formed acid anhydride is superposed on the absorption spectrum of C=O stretching vibration which is to be used for quantifying the esterification degree and ionization degree as described hereinafter, and originates from the carbonyl carbon of the ester and free carboxylic acid. Further, the thus formed acid anhydride is unstable and is hydrolyzed even under ordinary temperature and ordinary humidity so that it returns to a free carboxylic acid.
Accordingly, it is possible that the amount of the acid anhydride contained in the sample varies depending on the storing conditions (temperature, humidity, period of time) for the sample to be measured. Accordingly, the former treatment is conducted for the purpose of preliminarily hydrolyzing the acid anhydride contained in the sample to be measured.

Then, at the time of the actual measurement, the film as the sample to be measured is cut into a dimension of 1 cm × 5 cm, and the hardly hot water-soluble resin layer thereof is caused to contact a reflector plate, thereby to measure the infrared absorption spectrum of the surface of the hardly hot water-soluble resin layer.

Accordingly, the resultant infrared absorption spectrum shows the presence of the chemical structure providing the infrared absorption spectrum in at least a portion of the hardly hot water-soluble resin layer.

At the time of the above measurement of the spectra, the following conditions may preferably be used.

<FT-IR measurement condition>

Measurement method: attenuated total reflection method (ATR) method
Reflector plate: KRS-5 (Thallium Bromide-Iodide Crystal)
Number of accumulation: 30 times
Resolution: 4 $cm^{-1}$

(Principle of ionization degree/esterification degree measurement)

The C=O stretching vibration of the carbonyl carbon constituting the carboxylic acid originating from the polyacrylic acid type polymer, and that of the carbonyl carbon constituting an ester bond in the hardly hot water-soluble resin layer 2 according to the present invention, are superposed with each other so as to provide an absorption spectrum having

a maximum absorption wave number in the neighborhood of 1705 $cm^{-1}$ in the range of 1800 $cm^{-1}$ to 1600 $cm^{-1}$. On the other hand, the carboxylic acid anion (- $COO^-$) originated from the polyacrylic acid type polymer contained in the hardly hot water-soluble resin layer 2 according to the present invention provides an absorption spectrum having a maximum absorption wave number in the neighborhood of 1560 $cm^{-1}$ in the range of 1600 $cm^{-1}$ to 1500 $cm^{-1}$.

Accordingly, the infrared absorption spectrum of the hardly hot water-soluble resin layer 2 according to the present invention is measured as described above, and then, the ionization degree (and the esterification degree as described hereinafter) of the hardly hot water-soluble resin layer may be calculated by using a calibration curve which has preliminarily been prepared from the area ratio between both of the above-mentioned absorption spectra or the absorbance ratio at the maximum absorption wave number of both spectra.

(Calibration curve)

The calibration curve used herein may be prepared, e.g., by the following procedure.

Thus, the poly (meth)acrylic acid is preliminarily neutralized by use of a known amount of sodium hydroxide. With respect to the thus prepared samples having different mole ratios of carboxylic acid anion to all the carbonyl carbons:

(moles of carboxylic acid anions)/(moles of all carbonyl carbons),

the infrared absorption spectra are measured by the above-mentioned method. On the basis of the thus obtained absorption spectra, with respect to the two species of C=O stretching vibrations in the partially neutralized poly (meth) acrylic acid, i.e., C=O stretching vibrations provided by the carboxylic acid and the carboxylic acid anion, the area ratio between both of the absorption spectra or the absorbance ratio at the maximum absorption wave number is determined. Herein, the ratios of:

(moles of carboxylic acid anions)/(moles of all carbonyl carbons)

are already known, and therefore a calibration curve is prepared by regression analysis of a relationship between the above moles and the area ratio or the absorbance ratio which has been calculated from the infrared absorption spectra of the sample, and the ionization degree is determined by using the thus obtained calibration curve.

(Method of evaluating esterification degree)

The esterification degree of the hardly hot water-soluble resin layer 2 may also be determined by measuring the infrared absorption spectra of the hardly hot water-soluble resin layer 2. The infrared absorption spectra in this case is measured similarly to the case of the measurement of the ionization degree as described above by using the FT-IR 1710 manufactured by Perkin-Elmer Co. The carbonyl C=O stretching of the carboxylic acid originated from the polyacrylic acid type polymer, and the carbonyl C=O stretching of the carbonyl carbon constituting an ester bond in the hardly hot water-soluble resin layer 2 according to the present invention, provide a superposed absorption spectrum as described hereinabove.

In this situation, it is difficult to quantitatively differentiate the carbonyl C=O stretching vibration originated from the carboxylic acid, from the carbonyl C=O stretching vibration originated from the ester bond. Accordingly, in the present invention, the infrared absorption spectra of the hardly hot water-soluble resin layer 2 is processed so as to selectively isolate the C=O stretching vibration of the carbonyl carbon forming the ester bond, and the resultant carbonyl carbon C=O stretching vibration is compared with the absorption spectrum (before the isolation) including both of the C=O stretching vibration of the carbonyl carbon forming the ester bond and the C=O stretching vibration of the free carboxylic acid, thereby to effect the quantitative determination.

Specific examples of the quantitative determination method may include: peak resolution method wherein the waveform of the spectra is analyzed; and a differential spectrum method wherein the absorption spectrum of the poly (meth)acrylic acid which is a compound only containing the carbonyl carbon originating from the carboxylic acid is subtracted from the infrared absorption spectra of the resultant hardly hot water-soluble resin layer (in some cases, multiplication thereof by a certain coefficient is possible).

Hereinbelow, there are described the differential spectrum method and the peak resolution method more specifically.

<Differential spectrum method>

The infrared absorption spectra of the hardly hot water-soluble resin layer and the poly (meth)acrylic acid are measured by the above-mentioned method.

With respect to the poly (meth)acrylic acid, a 15 mass %-aqueous solution of the poly (meth)acrylic acid is applied onto a base material such as polyester film and then dried, and the resultant poly (meth)acrylic acid layer is used as a sample to be measured.

With respect to the thus obtained two infrared absorption spectra, the infrared absorption spectrum of the poly

(meth)acrylic acid is subtracted from the infrared absorption spectrum of the hardly hot water-soluble resin layer while multiplying the former spectrum by a certain coefficient. At this time, attention is paid to the spectrum of the hardly hot water-soluble resin layer having a maximum absorption wave number in the neighborhood of 1705 $cm^{-1}$ in the range of 1800 $cm^{-1}$ to 1600 $cm^{-1}$. This spectrum is one provided by superposing the C=O stretching vibration absorption spectra of the free carboxylic acid and that of the ester contained in the hardly hot water-soluble resin layer with each other. Then, in the spectra, a hypothetical line connecting the point thereof at 1850 $cm^{-1}$ and the point thereof at 1500 $cm^{-1}$ is supposed, and this line is considered as a baseline of the spectrum.

In the operation for determining the differential spectrum, when the coefficient by which the infrared absorption spectrum of the poly (meth)acrylic acid is multiplied, is gradually increased, the absorbance in the neighborhood of 1700 $cm^{-1}$ in the resultant differential spectrum will be disposed below the above-mentioned baseline. Then, on the other hand, the coefficient is gradually decreased so as to find a coefficient by which the absorbance in the neighborhood of 1700 $cm^{-1}$ will be in agreement with the above-mentioned baseline. The differential spectrum which is has been obtained by using the thus obtained coefficient is used for quantitating the esterification degree of the hardly hot water-soluble resin layer.

<Peak resolution method>

When the peak resolution method is used, an apparatus having the trade name FT-IR-8200 manufactured by Shimazu Seisakusho K.K.) is used as the above-mentioned Fourier-transform infrared absorption spectrum measuring apparatus having a function of processing the calculation concerning the peak resolution.

With respect to the measurement of the infrared absorption spectrum, the infrared absorption spectrum of the hardly hot water-soluble resin layer is measured by using the same ATR method as described above, and peak resolution processing is conducted by using peak resolution software for the above measuring apparatus, with respect to the spectrum of the hardly hot water-soluble resin layer having a maximum absorption wave number in the neighborhood of 1705 $cm^{-1}$ in the range of 1800 $cm^{-1}$ to 1600 $cm^{-1}$.

The area ratio or absorbance ratio at the maximum absorption wave number between the thus isolated absorption spectrum of C=O stretching vibration of the carbonyl carbon constituting the ester bond in the hardly hot water-soluble resin layer, and the absorption spectrum (before the isolation) including both of the C=O stretching vibrations of the carbonyl carbon constituting the ester bond and that of the carbonyl carbon constituting the free carboxylic acid, is defined as a mole ratio R between the (moles of carbonyl carbon forming the ester bond) and (total moles of the carbonyl carbon of the free carboxylic acid, and the carbonyl carbon forming the ester bond). Accordingly, the mole ratio R may be expressed by the following equation.

$$R = (A\ C{=}O,ESTER)/[(A\ C{=}O,ESTER) + (A\ C{=}O,FREE)]$$

In the above equation, (A C=O,ESTER) denotes the area of the infrared absorption spectrum of the C=0 stretching vibration of the carbonyl carbon forming the ester bond or the absorbance at the maximum absorption wave number thereof ; and (A C=O,FREE) denotes the area of the infrared absorption spectrum of the C=0 stretching vibration of the carbonyl carbon constituting the free carboxylic acid or the absorbance at the maximum absorption wave number thereof.

In another expression, this equation corresponds to:

$$R = d/(c + d),$$

or

$$R = d'/(c' + d').$$

In the above equation, "d", "c", "d'" and "c'" respectively denote the molar fractions of the chemical structures (D), (C), (D'), and (C') contained in Resin A and Resin B forming the hardly hot water-soluble resin layer. Accordingly, it is possible to determine the esterification degree defined by the equations (1) and (2) on the basis of the value of R and the value of the ionization degree which has quantitatively been determined by the above-mentioned method.

(Thicknesses of respective layers)

The thickness of each layer constituting the resin-laminated paper according to the present invention can appropriately be selected depending on various physical properties (e.g., gas barrier property, strength or sealing property) to be imparted to the resin-laminated paper, or the material constituting each layer. However, in general, the following thicknesses are preferred.

Paper material 1: 10 - 1000μm (more preferably, 50 - 500 μm)
Hardly hot water-soluble resin layer 2: 0.1- 50 μm (more preferably, 0.5 - 20 μm)
Adhesive resin layer 3: 0.1- 50 μm (more preferably, 0.5 - 20 μm)
Thermoplastic resin layer 4 having crystal melting point or Vicat softening temperature of 160 °C or higher: 5 - 100 μm (more preferably, 10 - 75 μm)
Surface resin layer 5 having crystal melting point or Vicat softening temperature of 160 °C or lower: 5-500 μm (more preferably, 5 - 200 μm)

(Other embodiments of resin-laminated paper)

The resin-laminated paper according to the present invention having the above structure is usable as a packaging material as such. However, for the purpose of another characteristic such as the heat sealing property to the resin-laminated paper, it is also possible to further dispose a layer comprising a thermoplastic resin as a surface resin layer on at least one side (one side or both sides of the resin-laminated paper) of the resin-laminated paper 10, 20 or 30 shown in Figs. 1 to 3.

Referring to the schematic sectional view of Fig. 4 , the resin-laminated paper 40 in this embodiment comprises: a paper material 1, a hardly hot water-soluble resin layer 2 disposed on at least one side of the paper material 1, and a layer (surface resin layer) 5 of a thermoplastic resin disposed on at least one of the other surfaces of the paper material 1 (the surface thereof on which the hardly hot water-soluble resin layer 2 is not disposed) and the side of the hardly hot water-soluble resin layer 2.

Referring to the schematic sectional view of Fig. 5, the resin-laminated paper 50 in this embodiment comprises: a paper material 1, a hardly hot water-soluble resin layer 2 disposed on at least one side of the paper material 1 by the medium of an adhesive resin layer 3; and a layer (surface resin layer) 5 of a thermoplastic resin disposed on at least one of the other surfaces of the paper material 1 (the surface thereof on which the hardly hot water-soluble resin layer 2 is not disposed by the medium of the adhesive resin layer 3) and the side of the hardly hot water-soluble resin layer 2.

Referring to the schematic sectional view of Fig. 6, the resin-laminated paper 60 in this embodiment comprises: a paper material 1, a hardly hot water-soluble resin layer 2 disposed on at least one side of the paper material 1 by the medium of an adhesive resin layer 3; a thermoplastic resin layer 4 having a crystal melting point or Vicat softening point of 160 °C or higher disposed on the surface of the hardly hot water-soluble resin layer; and a layer (surface resin layer) 5 of a thermoplastic resin disposed on at least one of the other surfaces of the paper material 1 (the surface thereof other than that on which the hardly hot water-soluble resin layer 2 is disposed by the medium of the adhesive resin layer 3, and the thermoplastic resin layer 4 having a crystal melting point or Vicat softening point of 160 °C or higher has been disposed on the surface thereof) and the side of the thermoplastic resin layer 4 having a crystal melting point or Vicat softening point of 160 °C or higher.

The thermoplastic resin constituting the above-mentioned surface resin layer 5 may appropriately be selected from thermoplastic resins having a crystal melting point or Vicat softening point 160 °C or lower, in consideration of an intended characteristic (e.g., heat sealing property). In order to mainly impart a heat sealing property, it is possible to use one selected from: olefin type resins, polyester resins, and polyamide resins, having a crystal melting point or Vicat softening point of 160 °C or lower, as the thermoplastic resin. Among these, an olefin type resin (such as polyethylene polypropylene) is particularly preferably usable.

The surface resin layer 5 comprising such a thermoplastic resin may be laminated by using a known method such as an extrusion lamination method, dry lamination method, or coating method.

Other embodiments of the resin-laminated paper according to the present invention will be described with reference to the respective drawings.

Referring to Fig. 7, the resin-laminated paper 70 in this embodiment comprises: a paper material 1, resin layers 2 of the hardly hot water-soluble disposed on both sides of the paper material 1, and layers (surface resin layers) 5 of a thermoplastic resin disposed on both sides of the hardly hot water-soluble resin layers 2.

Referring to Fig. 8, the resin-laminated paper 80 in this embodiment comprises: a paper material 1, layers 2 of the hardly hot water-soluble resin disposed on both sides of the paper material 1, through the medium of an adhesive resin layer 3; and thermoplastic resin layers (surface resin layers) 5 respectively disposed on both sides of the hardly hot

water-soluble resin layers 2.

Referring to Fig. 9, the resin-laminated paper 90 in this embodiment comprises: a paper material 1, layers 2 of the hardly hot water-soluble resin disposed on both sides of the paper material 1 through the medium of an adhesive resin layer 3; thermoplastic resin layers 4 having a crystal melting point or Vicat softening point of 160 °C or higher, which are respectively disposed on both sides of the hardly hot water-soluble resin layers 2; and thermoplastic resin layers (surface resin layers) 5 disposed on both sides of the thermoplastic resin layers 4.

According to these embodiments shown by Figs. 7-9, the smoothness, for example of the hardly hot water-soluble resin layer 2 can further be improved by utilizing the characteristic of the adhesive resin layer 3 and the thermoplastic resin layer 4 or 5 having a high melting point/high softening point, thereby to exhibit the oxygen barrier property more effectively.

In the case of the lamination of the respective layers at the time of the formation of the resin-laminated papers according to the above respective embodiments, it is also possible to conduct the lamination through the medium of an adhesive layer 3 (not shown) as desired. In addition, in accordance with a desired physical property (e.g., strength, or water vapor-barrier property), for the resin-laminated paper, it is also possible to appropriately add a desired layer (e.g., a polyamide layer when strength is desired; or a polyester film having thereon a vapor-deposited layer of an inorganic substance such as silicon oxide and aluminum oxide when water vapor-barrier property is desired).

(Other embodiment 1)

Hereinbelow, there is described another embodiment of the resin-laminated paper according to the present invention (Fig. 1).

In this embodiment, the above-mentioned hardly hot water-soluble resin comprises a resin which is formed from the following Resin A (A1 and/or A2).

Resin A1: a resin comprising at least one kind of (meth)acrylic acid type polymer selected from a poly (meth)acrylic acid and a partially neutralized product thereof; and a polyvinyl alcohol (PVA).

Resin A2: a resin comprising at least one kind of (meth)acrylic acid type polymer selected from a poly (meth)acrylic acid and a partially neutralized product thereof; and a saccharide (or sugar).

Specific preferred examples of the resin constituting the hardly hot water-soluble resin layer may include those as described below, with a view to the mutual balance among the coating property to the paper material, the oxygen barrier property, and a low affinity to food.

<In a case where the hardly hot water-soluble resin layer comprises the above-mentioned "Resin A1">

A resin having a ratio (mass ratio) in the range of PVA: (meth)acrylic acid type polymer = 95:5 to 5:95, and more preferably, in the range of 80:20 to 20:80.

<In a case where the hardly hot water-soluble resin layer comprises the above-mentioned "Resin A2">

A resin having a ratio (mass ratio) in the range of saccharide: (meth)acrylic acid type polymer = 90:10 to 10:90, and more preferably, in the range of 60:40 to 20:80.

<In a case where the hardly hot water-soluble resin layer comprises the above-mentioned "Resin A1" and "Resin A2">

A resin having a ratio (mass ratio) in the range of (total amount of PVA and saccharide): (meth)acrylic acid type polymer = 95:5 to 5:95, and more preferably, in the range of 80:20 to 20:80.

(Process for forming resin-laminated paper)

The method for obtaining the resin-laminated paper according to the present invention is not particularly limited. In a preferred embodiment, a resin solution comprising the above-mentioned Resin A1 and/or Resin A2 (preferably, a resin solution obtained by dissolving the above A1 and/or Resin A2 in a solvent such as water or water/alcohol mixed liquid) is applied onto at least one side of a paper material (i.e., at least one surface of the paper material), thereafter the solvent is removed, and then the resultant laminated product is heat-treated (preferably , heat-treated at a temperature of 160 °C or higher), thereby to obtain a resin-laminated paper.

Based on the above heat treatment, the resultant resin layer to be formed from the Resin A1 and/or Resin A2 becomes a "hardly hot water-soluble" resin as described above.

In another embodiment for obtaining the resin-laminated paper according to the present invention, e.g., a resin solution comprising the above-mentioned Resin A1 and/or Resin A2 (preferably, a resin solution obtained by dissolving the above Resin A1 and/or Resin A2 in a solvent such as water or water/alcohol mixed liquid) is applied onto a surface of, for example, an aluminum foil, thereafter the solvent is removed, and then the resultant laminated product is heat-treated (preferably, heat-treated at a temperature of 160 °C or higher), thereby to obtain a hardly hot water-soluble resin layer. The thus obtained resin layer is peeled from the above aluminum foil, and laminated on at least one side of a paper material (i.e., at least one surface of the paper material), thereby to obtain a resin-laminated paper.

The method of applying the resin solution onto the surface of the paper material is not particularly limited. Preferred examples thereof may include: a method wherein the paper material is immersed in a resin solution, a step wherein the resin solution is applied or provided to the paper material by using a method such as spraying, brush application, or transferring from a roll; and a step wherein the amount of the resin solution to be applied is regulated by use of, for example, a doctor knife.

(Oxygen barrier property)

The hardly hot water-soluble resin layer comprising Resin A and/or Resin A2 provided by the above procedure has a characteristic that it is excellent in oxygen barrier property. When a resin-laminated paper for a use in which a high oxygen barrier property is required, it is preferred to control the condition of the heat-treatment so as to regulate the oxygen permeability at 30 °C, 80 % RH of the hardly hot water-soluble resin layer (thickness: 3 μm, coating amount: 4.5 $g/m^2$) to about 100 $cm^3/m^2 \cdot day \cdot atm$ or lower (more preferably 50 $cm^3/m^2 \cdot day \cdot atm$ or lower, particularly preferably 10 $cm^3/m^2 \cdot day \cdot atm$ or lower).

(Thickness of each layer)

The thickness of each layer constituting the resin-laminated paper according to the present invention may appropriately be selected depending on the various physical properties to be imparted to the laminated paper (e.g. oxygen gas barrier property and non-adhesiveness to food), or starting material for each layer. However, in general, the following thicknesses are preferred.

Paper material: 10 - 400 μm (more preferably, 40-400 μm)
Hardly hot water-soluble resin: 1- 50 μm (more preferably, 1- 20 μm)
Surface resin: 1- 500 μm (more preferably, 5 - 200 μm)

The above hardly hot water-soluble resin layer may exhibit a low affinity to food such as curry, and has a characteristic such that the food is less liable to stick to the resin layer, even when the food contacts the resin layer.

It is preferred to form the resin-laminated paper according to the present invention such that a major portion of the resin is present on the surface of the paper material, while a portion of the resin penetrates into cavities or voids between the fibers constituting a surface layer of the paper material. In such an embodiment, a so-called "anchor effect" may effectively be exhibited between the resin layer and the paper material.

(Another embodiment 2 of resin-laminated paper)

The resin-laminated paper according to the present invention having the above structure is usable as a packaging material as such. However, for the purpose of imparting another characteristic such as heat sealing property to the resin-laminated paper, it is also possible to further dispose a layer comprising a thermoplastic resin as a surface resin layer on at least one side (one side or both sides) of the resin-laminated paper 10 shown in Fig. 1.

Referring to the schematic sectional view of Fig. 10, the resin-laminated paper 120 in this embodiment comprises: a paper material 1, a hardly hot water-soluble resin layer 2 disposed on at least one side of the paper material 1, and a layer (surface resin layer) 13 of a thermoplastic resin disposed on at least one of the other surfaces of the paper material 1 (the surface thereof on which the hardly hot water-soluble resin layer 2 is not disposed) and the side of the hardly hot water-soluble resin layer 2.

The thermoplastic resin constituting the above-mentioned surface resin layer 13 may appropriately be selected in consideration of an intended characteristic (e.g., heat sealing property). In order to mainly impart a heat sealing property, it is possible to use one selected from olefin type resins, polyamide resins, or polyester resins, as the thermoplastic resin. Among these, an olefin type resin is particularly preferably usable.

The surface resin layer 13 comprising such a thermoplastic resin may be laminated by using a known method such as a coating method.

A further embodiment of the resin-laminated paper according to the present invention is shown in the schematic

sectional view of Fig. 11. Referring to Fig. 11, the resin-laminated paper 130 in this embodiment comprises: a paper material 1, hardly hot water-soluble resin layers 2 disposed on both sides of the paper material 1, and thermoplastic resin layers (surface resin layer) 13 disposed on both sides of the hardly hot water-soluble resin layer 2. According to such an embodiment, it is possible to exhibit the oxygen barrier property of hardly hot water-soluble resin layer 2 more effectively.

(Another embodiment 4)

Referring to Fig. 12, the resin-laminated paper 210 in this embodiment comprises: at least, a base material layer 23 comprising a paper material 1, and an adhesive resin layer 22 disposed on at least one surface side of the paper material 1, and a hardly hot water-soluble resin layer 24 comprising the above-mentioned Resin A1 and/or Resin A2, wherein the hardly hot water-soluble resin layer is disposed on the above-mentioned adhesive resin layer side of the base material layer.

(Base material layer)

The base material layer usable in the present invention is a base material having the layer structure wherein an adhesive resin layer is disposed in contact with at least one surface of the paper material (i.e., one side or both sides of the paper material).

As the paper material constituting the above base material layer, it is possible to use the same material as the paper material 1 as described above without particular limitation.

In this embodiment, specific examples of the poly (meth)acrylic acid may include: polyacrylic acid, polymethacrylic acid, copolymer of acrylic acid and methacrylic acid, or mixtures of these polymers. The number-average molecular weight thereof may preferably be in the range of 2000 - 250000.

In the resin-laminated paper according to the present invention, the adhesive resin layer is disposed on the surface of the paper material on which the hardly hot water-soluble resin layer is to be disposed, and therefore it is possible to prevent e.g. peeling between the paper material and the resin layer (such as the hardly hot water-soluble resin layer and thermoplastic resin layer). In addition, the hardly hot water-soluble resin layer may be laminated on the paper material so as to provide a good uniformity in the resin layer thickness. As a result, the high oxygen barrier property of the hardly hot water-soluble resin layer may be exhibited sufficiently.

(Another embodiment of resin-laminated paper)

The resin-laminated paper according to the present invention having the above structure is usable as such as a packaging material. However, for the purpose of imparting another characteristic such as heat sealing property, strength, water resistance, and resistance to chemical agents, to the resin-laminated paper, it is also possible to further incorporate at least one thermoplastic resin layer in addition to the base material layer and the hardly hot water-soluble resin layer.

The schematic sectional view of Fig. 13 shows another preferred embodiment of such a resin-laminated paper. The resin-laminated paper 220 in this embodiment comprises: the above-mentioned resin-laminated paper 210 shown in Fig. 12 and a thermoplastic resin layer 25 disposed on one side of the resin-laminated paper 210. More specifically, the resin-laminated paper 220 in this embodiment comprises: a base material layer 23 comprising a paper material 1 and an adhesive resin layer 22 disposed on one surface side of the paper material 1, a hardly hot water-soluble resin layer 24 disposed on the surface of the adhesive resin layer 22 of the base material layer 23, and a thermoplastic resin layer 25 disposed on the surface of the hardly hot water-soluble resin layer 24.

As the thermoplastic resin constituting the above thermoplastic resin layer 25, it is possible to use a thermoplastic resin known in the art, and may appropriately be selected in consideration of an intended purpose as described above. For the purpose of mainly imparting a heat sealing property and strength, specific examples thereof may include: olefin type resins such as ethylene type resin, propylene type resin, ethylene-(meth)acrylic acid ester copolymer and ionomer; and polyamide resins such as nylon 6, nylon 66, nylon 12, nylon 6-12 copolymer, and nylon 6-66 copolymer. For the purpose of mainly imparting water resistance or chemical agent resistance, it is possible to use the above olefin type resin, or a polyester resin such as polyethylene terephthalate.

The number and arrangement position of the above thermoplastic resin layer is not particularly limited, but may appropriately be determined depending on the usage of the resultant resin-laminated paper. At the time of the incorporation of the thermoplastic resin layer, it is possible to dispose a layer comprising the above-mentioned adhesive resin as desired.

The above resin-laminated paper 220 may preferably be obtained by laminating the above-mentioned thermoplastic resin layer on the surface of the hardly hot water-soluble resin layer 24 of the above-mentioned resin-laminated

paper 210 by a method known in the art such as a lamination method or a coating method.

In addition, in another method, a resin solution comprising the above-mentioned Resin A1 and/or Resin A2 (preferably, a solution obtained by dissolving the above-mentioned Resin A1 and/or Resin A2 in a solvent such as water or water/alcohol mixed liquid) as a coating liquid is applied onto one side surface of a sheet-like material or film-like material comprising the above-mentioned thermoplastic resin, then the solvent is removed, and thereafter heat-treated (preferably, at a temperature of 160 °C or higher) thereby to prepare a laminated product comprising a thermoplastic resin layer 25 and a hardly hot water-soluble resin layer 24. Then, the resultant laminated product is laminated onto a base material layer 23 so that the adhesive resin layer 22 of the base material layer 23 contacts the hardly hot water-soluble resin layer 24 of the laminated product, thereby to preferably provide the above resin-laminated paper. This embodiment may provide a product excellent in the oxygen barrier property, strength and water resistance. In the resin-laminated paper 220 of Fig. 13, an adhesive resin layer 22 may be incorporated therein as desired, for the purpose of improving the adhesive property between the thermoplastic resin layer 25 and the hardly hot water-soluble resin layer 24.

Fig. 14 is a schematic sectional view showing a further embodiment of the resin-laminated paper according to the present invention. Referring to Fig. 14, the resin-laminated paper 230 in this embodiment comprises: a base material layer 23 comprising a paper material 1 and an adhesive resin layer 22 disposed on a surface side of the paper material 1, a thermoplastic resin layer 25 disposed on the surface of the adhesive resin layer 22 of the base material layer 23, and a hardly hot water-soluble resin layer 24 disposed on the surface of the thermoplastic resin layer 25, and a thermoplastic resin layer 25 disposed on the surface of the hardly hot water-soluble resin layer 24. This embodiment may provide a product excellent in the oxygen barrier property, strength and water resistance.

In the resin-laminated paper of Fig. 14, an adhesive resin layer 22 may be incorporated therein as desired, for the purpose of improving the adhesive property between the thermoplastic resin layer 25 and the hardly hot water-soluble resin layer 24.

(Thickness of each layer)

The thickness of each layer constituting the resin-laminated paper according to the present invention may appropriately be selected depending on various physical properties to be imparted to the laminated paper (e.g., oxygen gas barrier property or heat sealing property) or on the material constituting each layer. However, in general, the following thicknesses are preferred.

Base material layer:

paper material: 10 - 1000 μm, preferably 50 - 800 μm
Adhesive resin layer: 2 - 100 μm, preferably, 2 -50 μm
Hardly hot water-soluble resin layer: 0.1- 50 μm, preferably, 0.2 - 10 μm
Thermoplastic resin layer: 1- 500 μm, preferably 5 - 200 μm.

Further, the resin-laminated paper according to the present invention does not contain a metal layer such as aluminum foil. Accordingly, when the resin-laminated paper is formed into a packaging container for containing certain contents, the contents can be heated by use of a microwave oven. In addition, foreign matter possibly contained in the contents of the packaging container may be detected by using a metal detector. In addition, the resin-laminated paper according to the present invention provides very little incineration residue even after the incineration treatment thereof, as compared with a conventional laminated paper comprising an aluminum foil, and therefore such a resin-laminated paper can easily be incinerated as waste.

Hereinbelow, the present invention will be described in more detail with reference to specific Examples.

Examples

In the preparation of resin-laminated papers in the following Examples and Comparative Examples, the following materials were used.

(Hardly hot water-soluble resin layer 2)

Polyacrylic acid (PAA): Alon A-10H manufactured by Toa Gosei Kagaku K.K. (25 mass %-aqueous solution of PAA, number-average molecular weight of PAA: 150,000)
Polyvinyl alcohol (PVA): Poval 105, manufactured by Kuraray K.K. (average degree of polymerization: 500, saponification degree: 98.5 %)
Water-soluble starch: Starch (soluble), manufactured by Wako Junyaku Kogyo K.K.

All the reagents used herein other than those as described above were Reagents (highest quality regents) corresponding to those manufactured by Wako Junyaku Kogyo K.K.

Art paper: basis weight 100 g/$m^2$ (thickness: 120 μm). The art paper is a paper material, the surface of which has been smoothed by using an inorganic substance such as kaolin, resin, or mixtures thereof.

(Heat-resistant film 4)

Heat-resistant film comprising a thermoplastic resin having a crystal melting point or Vicat softening point of 160 °C or higher: stretched (or oriented) polyester film (PET film), Lumirror S-10 manufactured by Toray K.K. (12 μm, crystal melting point: 260 °C)

(Adhesive resin layer 3)

Adhesive for dry lamination: Ad-Coat AD-590, manufactured by Toyo Morton K.K. (curing agent CAT-56)

(Surface resin layer 5)

Non-stretched polypropylene film (CPP film): Pylene film P-1128 (30 μm, crystal melting point: 138 °C) manufactured by Toyobo K.K.

Polyethylene film (PE film): Suzuron L-100, (30 μm, crystal melting point: 120°C), manufactured by Aisero Kagaku K.K.

(Films used in Comparative Examples)

Ethylene-vinyl alcohol copolymer film (EVOH film): Eval film EF-XL (thickness: 15 μm) manufactured by Kuraray K.K. (Formation of hardly hot water-soluble resin layer)

The hardly hot water-soluble resin layer 2 comprising Resin A was formed by preparing an aqueous mixture solution (coating liquid) comprising a polyacrylic acid type polymer and a poly-alcohol type polymer, applying the resultant coating liquid onto each of a paper material 1 and a PET film 5 on which an adhesive resin layer 3 had been formed, by using a reverse-roll coater (Multi-Coater, manufactured by Hirano-Tecseed Co.), and then drying the resultant coating layer, and heat-treating the resultant product in an oven at 200 °C for 15 minutes.

The hardly hot water-soluble resin layer 2 comprising Resin B was formed by immersing the PET film 5 on which the Resin A layer had been formed, in water containing magnesium hydroxide or calcium hydroxide (1g/1000 ml) for 60 minutes at 90 °C.

The resin concentration in the coating liquid was changed depending on the difference in the coating property to a base material to be coated. More specifically, when the coating liquid was directly applied onto the paper material 1, a coating liquid having a resin concentration of 25 mass % was used, and when the coating liquid was applied onto the PET film 5 or paper material 1 on which an adhesive resin layer 3 had been formed, a coating liquid having a resin concentration of 15 mass % was used.

In examples according to the present invention, the following hardly hot water-soluble resin layers having different structures were formed in the following manner.

Hardly hot water-soluble resin layer① (Resin A):

Resin composition of starting material → 10 %-neutralized PAA : PVA = 70 :30 (mass ratio)

Hardly hot water-soluble resin layer② (Resin A):

Resin composition of starting material → 10 %-neutralized PAA : starch = 70 :30 (mass ratio)

Hardly hot water-soluble resin layer③ (Resin A):

coating liquid composition of starting material→ PAA : starch: sodium hypophosphite mono-hydrate = 70 : 30 : 10.5 (mass ratio)

Hardly hot water-soluble resin layer④(Resin B):

Resin composition of starting material → 10 %-neutralized PAA : PVA =70:30 (mass ratio),

ion-crosslinking by magnesium hydroxide

Hardly hot water-soluble resin layer⑤(Resin B):

Resin composition of starting material → 10 %-neutralized PAA : starch = 70 :30 (mass ratio),

ion-crosslinking by magnesium hydroxide

Hardly hot water-soluble resin layer⑥(Resin B):

Resin composition of starting material → 10 %-neutralized PAA : starch = 70 : 30 (mass ratio),

ion-crosslinking by calcium hydroxide

(Esterification degree and ionization degree of hardly hot water-soluble resin layer)

The esterification degree and the ionization degree of the hardly hot water-soluble resin layer were determined by the methods as described hereinabove in the specification. At this time, with respect to the measurement of the infrared absorption spectra of the hardly hot water-soluble resin layer 2, the total reflection spectrum of the hardly hot water-soluble resin layer surface was measured, before a certain layer was disposed on the hardly hot water-soluble resin layer 2 surface in the process for forming the resin-laminated paper.

(Laminating method)

The lamination of the hardly hot water-soluble resin layer, and the paper material, the paper material on which the adhesive resin layer had been formed, or the PET film was conducted by the above-mentioned method. The laminations required for forming the resin-laminated paper, other than as that as described above were conducted by using an adhesive for dry lamination (trade name: Ad-coat AD-590, manufactured by Toyo Morton Co. (curing agent CAT-56), coating amount: 2 $g/m^2$); and a dry-laminating device (trade name: Multi-Coater, manufactured by Hirano-Tecseed Co., laminating temperature: 100°C, laminating rate: 10 m/min, laminating pressure: 15 $kg/cm^2$, aging: 40 °C, for two days).

(Method of evaluating oxygen barrier property)

The oxygen barrier property of the resin-laminated paper was evaluated by measuring oxygen permeability under the conditions of a temperature of 30 °C, and a relative humidity of 80 %RH using an oxygen permeability tester device OXTRAN-2/20 manufactured by Modern Control Co.

(Evaluation of strength of resin-laminated paper)

The strength of the paper material on which the hardly hot water-soluble resin layer had directly been formed was evaluated by measuring the Young's modulus of the paper material. The Young's modulus was measured in accordance with JIS K-7127 by using a tension tester TENSILON RTM-100 manufactured by TOYO BLADWIN Co.

(Structures of resin-laminated papers in the Examples and Comparative Examples)

Hereinbelow, the layer structures of the resin-laminated papers in the Examples and Comparative Examples are shown.

Example 1

(surface resin layer 5; PE) / (adhesive resin layer 3) / paper material 1/ (hardly hot water-soluble resin layer①) / (adhesive resin layer 3) / (surface resin layer 5; PE)

Example 2

(surface resin layer 5; PE) / (adhesive resin layer 3) / paper material 1/ (hardly hot water-soluble resin layer②) / (adhesive resin layer 3) / (surface resin layer 5; PE)

Example 3

(surface resin layer 5; PE) / (adhesive resin layer 3) / paper material 1/ (hardly hot water-soluble resin layer③) / (adhesive resin layer 3) / (surface resin layer 5; PE)

Comparative Example 1

(surface resin layer 5; PE) / (adhesive resin layer 3) / paper material 1/ (adhesive resin layer 3) / (surface resin layer 5; PE)

Example 4

(surface resin layer 5; PE) / (adhesive resin layer 3) / paper material 1/ (adhesive resin layer 3) / (hardly hot water-soluble resin layer①) / (adhesive resin layer 3) / (surface resin layer 5; PE)

Example 5

(surface resin layer 5; PE) / (adhesive resin layer 3) / paper material 1/ (adhesive resin layer 3) / (hardly hot water-soluble resin layer②) / (adhesive resin layer 3) / (surface resin layer 5; PE)

Example 6

(surface resin layer 5; PE) / (adhesive resin layer 3) / paper material 1/ (adhesive resin layer 3) /(hardly hot water-soluble resin layer③) / (adhesive resin layer 3) / (surface resin layer 5; PE)

Example 7

Paper material 1/ (adhesive resin layer 3) / (hardly hot water-soluble resin layer①) / (heat-resistant film)

Example 8

Paper material 1/ (adhesive resin layer 3) /(hardly hot water-soluble resin layer②) / (heat-resistant film)

Example 9

Paper material 1/ (adhesive resin layer 3) /(hardly hot water-soluble resin layer③) / (heat-resistant film)

Example 10

Paper material 1/ (adhesive resin layer 3) /(hardly hot water-soluble resin layer④) / (heat-resistant film)

Example 11

Paper material 1/ (adhesive resin layer 3) /(hardly hot water-soluble resin layer⑤) / (heat-resistant film)

Example 12

Paper material 1/ (adhesive resin layer 3) /(hardly hot water-soluble resin layer⑥) / (heat-resistant film)

Example 13

Paper material 1/ (adhesive resin layer 3) /(heat-resistant film) / (hardly hot water-soluble resin layer③)

Example 14

Paper material 1/ (adhesive resin layer 3) / (heat-resistant film) / (hardly hot water-soluble resin layer④)

Example 15

(surface resin layer 5; PE) / (adhesive resin layer 3) / paper material 1/ (adhesive resin layer 3) / (hardly hot water-soluble resin layer③) / (heat-resistant film) / (adhesive resin layer 3) / (surface resin layer 5; PE)

Example 16

(surface resin layer 5; PE) / (adhesive resin layer 3) / paper material 1/ (adhesive resin layer 3) / (heat-resistant film) / (hardly hot water-soluble resin layer③) / (adhesive resin layer 3) / (surface resin layer 5; PE)

Example 17

(surface resin layer 5; CPP) / (adhesive resin layer 3) / paper material 1/ (adhesive resin layer 3) / (heat-resistant film) / (hardly hot water-soluble resin layer③) / (adhesive resin layer 3) / (surface resin layer 5; CPP)

Comparative Example 2

Paper material 1/ (adhesive resin layer 3) / (heat-resistant film)

Comparative Example 3

(surface resin layer 5; PE) / (adhesive resin layer 3) / paper material 1/ (adhesive resin layer 3) / (heat-resistant film) / (adhesive resin layer 3) / (surface resin layer 5; PE)

Comparative Example 4

(surface resin layer 5; CPP) / (adhesive resin layer 3) / paper material 1/ (adhesive resin layer 3) / (heat-resistant film) / (adhesive resin layer 3) / (surface resin layer 5; CPP)

Comparative Example 5

Paper material 1/ (adhesive resin layer 3) / (EVOH film)

Comparative Example 6

(surface resin layer 5; PE) / (adhesive resin layer 3) / paper material 1/ (adhesive resin layer 3) / (EVOH film) / (adhesive resin layer 3) / (surface resin layer 5; PE)

Comparative Example 7

(surface resin layer 5; CPP) / (adhesive resin layer 3) / paper material 1/ (adhesive resin layer 3) / (EVOH film) / (adhesive resin layer 3) / (surface resin layer 5; CPP)

Comparative Example 8

(surface resin layer 5; PE) / (adhesive resin layer 3) / paper material 1/ (adhesive resin layer 3) / (aluminum foil) / (adhesive resin layer 3) / (surface resin layer 5; PE)

Hereinbelow, data obtained in the above Examples and Comparative Examples are shown in the form of tables.

# TABLE 1

| Examples Comp.Ex. | lamination structure | esterification degree | ionization degree | oxygen permeability | strength G Pa |
|---|---|---|---|---|---|
| Example 1 | PE/ad/paper material/①/ad/PE | 0.3 | — | 3 | 7.8 |
| Example 2 | PE/ad/paper material/②/ad/PE | 0.3 | — | 5 | 7.8 |
| Example 3 | PE/ad/paper material/③/ad/PE | 0.3 | — | 3 | 7.8 |
| Comp.Ex. 1 | PE/ad/paper material/ad/PE | — | — | 5000 | 6.3 |

(In the above table)

Unit of the oxygen permeability: $cm^3/m^2 \cdot day \cdot atm$,

Coating amount: 10 g $/m^2$,

ad: adhesive resin

## TABLE 2

| Examples Comp.Ex. | lamination structure | esterification degree | ionization degree | oxygen permeability | adaptablity to microwave oven | easiness in incineration |
|---|---|---|---|---|---|---|
| Example 4 | PE/ad/paper material/ad/①/ad/PE | 0.3 | — | 0.1 | ○ | ○ |
| Example 5 | PE/ad/paper material/ad/②/ad/PE | 0.3 | — | 0.2 | ○ | ○ |
| Example 6 | PE/ad/paper material/ad/③/ad/PE | 0.3 | — | 0.1 | ○ | ○ |
| Example 7 | paper material/ad/①/PET | 0.3 | — | 0.1 | ○ | ○ |
| Example 8 | paper material/ad/②/PET | 0.3 | — | 0.2 | ○ | ○ |
| Example 9 | paper material/ad/③/PET | 0.3 | — | 0.1 | ○ | ○ |
| Example 10 | paper material/ad/④/PET | 0.1 | 0.5 | 0.01 | ○ | ○ |
| Example 11 | paper material/ad/⑤/PET | 0.1 | 0.5 | 0.01 | ○ | ○ |
| Example 12 | paper material/ad/⑥/PET | 0.1 | 0.5 | 0.01 | ○ | ○ |
| Example 13 | paper material/ad/PET/③ | 0.3 | — | 0.1 | ○ | ○ |
| Example 14 | paper material/ad/PET/④ | 0.1 | 0.5 | 0.01 | ○ | ○ |
| Example 15 | PE/ad/paper material/ad/③/PET/ad/PE | 0.3 | — | 0.1 | ○ | ○ |
| Example 16 | PE/ad/paper material/ad/PET/③/ad/PE | 0.3 | — | 0.1 | ○ | ○ |
| Example 17 | CPP/ad/paper material/ad/PET/③/ad/CPP | 0.3 | — | 0.1 | ○ | ○ |
| Comp.Ex. 2 | paper material/ad/PET | — | — | 150 | ○ | ○ |
| Comp.Ex. 3 | PE/ad/paper material/ad/PET/ad/PE | — | — | 140 | ○ | ○ |
| Comp.Ex. 4 | CPP/ad/paper material/ad/PET/ad/CPP | — | — | 140 | ○ | ○ |
| Comp.Ex. 5 | paper material/ad/EVOH | — | — | 0.5 | ○ | ○ |
| Comp.Ex. 6 | PE/ad/paper material/ad/EVOH/ad/PE | — | — | 150 | ○ | ○ |
| Comp.Ex. 7 | CPP/ad/paper material/ad/EVOH/ad/CPP | — | — | 0.5 | ○ | ○ |
| Comp.Ex. 8 | PE/ad/paper material/ad/Al foil/ad/PE | — | — | 0 | × | × |

(In the above table)

Unit of oxygen permeability: $cm^3/m^2 \cdot day \cdot atm$,

Thickness of hardly hot water-soluble resin layer: 2 μm,

ad: adhesive resin

The hardly hot water-soluble resin layer④shown in the above table 2 was prepared on the basis of the hardly hot water-soluble resin①, and the hardly hot water-soluble resin layer⑤,⑥was prepared on the basis of the hardly hot water-soluble resin② However, the esterification degree thereof is different from that of② According to the findings and knowledge of the present inventors, it is presumed that this phenomenon is based on the hydrolysis of the ester bond of②in the case of the ion-crosslinking treatment.

Example 18

1.4 mass parts of sodium hydroxide was added to and dissolved in 100 mass parts of 25 mass %-aqueous PAA solution, thereby to prepare an aqueous solution of partially neutralized PAA having a neutralization degree of 10 %. Then, the resultant aqueous solution of the partially neutralized PAA was mixed with 43 mass parts of 25 mass %-PVA aqueous solution, thereby to prepare a coating liquid of an aqueous solution mixture comprising the partially neutralized PAA and PVA in a ratio of (partially neutralized PAA) : PVA = 70 : 30 (mass %).

Then, the resultant coating liquid was applied onto a glassine paper (basis weight: 40 $g/m^2$) ) using a desk-type bar coater (trade name: K303 Proofer, manufactured by RK Print-Coat Instruments Co.) so as to provide a coating amount of 10 $g/m^2$ after drying, and then dried at 100 °C for 20 minutes, thereby to form a resinous film on the glassine paper. Further, the above resin-laminated paper after the drying was heat-treated in an oven at 200 °C for 15 minutes.

The oxygen permeability of the thus obtained heat-treated resin-laminated paper was measured at a temperature of 30 °C and a relative humidity of 80 % RH by using an oxygen permeability tester device OXTRAN-2/20 manufactured by Modern Control Co.

Example 19

1.4 mass parts of sodium hydroxide was added to and dissolved in 100 mass parts of 25 mass %-aqueous PAA solution, thereby to prepare an aqueous solution of partially neutralized PAA having a neutralization degree of 10 %. Then, the resultant aqueous solution of the partially neutralized PAA was mixed with 43 mass parts of 25 mass % water-soluble starch aqueous solution, thereby to prepare a coating liquid of an aqueous solution mixture comprising the partially neutralized PAA and the water-soluble starch in a ratio of (partially neutralized PAA) : starch = 70 : 30 (mass %).

Then, the resultant coating liquid was applied onto a glassine paper (basis weight: 40 $g/m^2$) using a desk-type bar coater so as to provide a coating amount of 10 g/m2 after drying, and then was dried at 100 °C for 20 minutes, thereby to form a resinous film on the glassine paper. Further, the above resin-laminated paper after drying was heat-treated in an oven at 200 °C for 15 minutes.

The oxygen permeability of the thus obtained heat-treated resin-laminated paper was measured at a temperature of 30 °C and a relative humidity of 80 % RH using an oxygen permeability tester device OXTRAN-2/20 manufactured by Modern Control Co.

Example 20

70 mass parts of 25 mass %-aqueous PAA solution and 30 mass parts of 25 mass % water-soluble starch aqueous solution were mixed with each other, and then sodium hypophosphite mono-hydrate was added to and dissolved in the resultant solution in an amount of 15 mass parts with respect to 100 mass parts of the PAA solid content, thereby to prepare a coating liquid comprising sodium hypophosphite and a mixture of PAA and the starch in a ratio of PAA : starch = 70 : 30 (mass %).

Then, the resultant coating liquid was applied onto a glassine paper (basis weight: 40 $g/m^2$) using a desk-type bar

coater so as to provide a coating amount of 10 g/m2 after drying, and then was dried at 100 °C for 20 minutes, thereby to form a resinous film on the glassine paper. Further, the above resin-laminated paper after the drying was heat-treated in an oven at 200 °C for 15 minutes.

The oxygen permeability of the thus obtained heat-treated resin-laminated paper was measured at a temperature of 30 °C and a relative humidity of 80 % RH by using an oxygen permeability tester device of OXTRAN-2/20 manufactured by Modern Control Co.

Example 21

1.4 mass parts of sodium hydroxide was added to and dissolved in 100 mass parts of 25 mass %-aqueous PAA solution, thereby to prepare an aqueous solution of the partially neutralized PAA having a neutralization degree of 10 %. Then, the resultant aqueous solution of partially neutralized PAA was mixed with 43 mass parts of 25 mass %-PVA aqueous solution, thereby to prepare a coating liquid of an aqueous solution mixture comprising the partially neutralized PAA and PVA in a ratio of (partially neutralized PAA) : PVA = 70 : 30 (mass %).

Then, the resultant coating liquid was applied onto an art paper (basis weight: 100 g/$m^2$) using a desk-type bar coater so as to provide a coating amount of 10 g/$m^2$ after drying, and then was dried at 100 °C for 20 minutes, thereby to form a resinous film on the art paper. Further, the above resin-laminated paper after the drying was heat-treated in an oven at 200 °C for 15 minutes. The "art paper" used herein was a paper material, the surface of which had been smoothed by applying, for example, a pigment on the surface of a wood-free paper.

The oxygen permeability of the thus obtained heat-treated resin-laminated paper was measured at a temperature of 30 °C and a relative humidity of 80 % RH using an oxygen permeability tester device OXTRAN-2/20 manufactured by Modern Control Co.

Example 22

1.4 mass parts of sodium hydroxide was added to and dissolved in 100 mass parts of 25 mass %-aqueous PAA solution, thereby to prepare an aqueous solution of the partially neutralized PAA having a neutralization degree of 10 %. Then, the resultant aqueous solution of partially neutralized PAA was mixed with 43 mass parts of 25 mass % water-soluble starch aqueous solution, thereby to prepare a coating liquid of an aqueous solution mixture comprising the partially neutralized PAA and the water-soluble starch in a ratio of (partially neutralized PAA) : starch = 70 : 30 (mass %).

Then, the resultant coating liquid was applied onto an art paper (basis weight: 100 g/$m^2$) using a desk-type bar coater so as to provide a coating amount of 10 g/m2 after drying, and then was dried at 100 °C for 20 minutes, thereby to form a resinous film on the art paper. Further, the above resin-laminated paper after the drying was heat-treated in an oven at 200 °C for 15 minutes.

The oxygen permeability of the thus obtained heat-treated resin-laminated paper was measured at a temperature of 30 °C and a relative humidity of 80 % RH by using an oxygen permeability tester device OXTRAN-2/20 manufactured by Modern Control Co.

Example 23

70 mass parts of 25 mass %-aqueous PAA solution and 30 mass parts of 25 mass % water-soluble starch aqueous solution were mixed with each other, and then sodium hypophosphite mono-hydrate was added to and dissolved in the resultant solution in an amount of 15 mass parts with respect to 100 mass parts of the PAA solid content, thereby to prepare a coating liquid comprising sodium hypophosphite and a mixture of PAA and the starch in a ratio of PAA : starch = 70 : 30 (mass %).

Then, the resultant coating liquid was applied onto an art paper (basis weight: 100 g/$m^2$) using a desk-type bar coater so as to provide a coating amount of 10 g/m2 after drying, and then was dried at 100 °C for 20 minutes, thereby to form a resinous film on the art paper. Further, the above resin-laminated paper after the drying was heat-treated in an oven at 200 °C for 15 minutes.

The oxygen permeability of the thus obtained heat-treated resin-laminated paper was measured at a temperature of 30 °C and a relative humidity of 80 % RH using an oxygen permeability tester device OXTRAN-2/20 manufactured by Modern Control Co.

Comparative Example 9

A 25 mass %-PVA aqueous solution was applied onto a glassine paper (basis weight: 40 g/$m^2$) by using a desk-type bar coater so as to provide a coating amount of 10 g/m2 after drying, and then was dried, thereby to form a resinous film on the glassine paper. Further, the above resin-laminated paper after the drying was heat-treated in an

oven at 200 °C for 15 minutes.

The oxygen permeability of the thus obtained heat-treated resin-laminated paper was measured at a temperature of 30 °C and a relative humidity of 80 % RH using an oxygen permeability tester device OXTRAN-2/20 manufactured by Modern Control Co.

Comparative Example 10

A 25 mass %-starch aqueous solution was applied onto a glassine paper (basis weight: 40 g/m$^2$) by using a desk-type bar coater so as to provide a coating amount of 10 g/m2 after drying, and then was dried, thereby to form a resinous film on the glassine paper. Further, the above resin-laminated paper after the drying was heat-treated in an oven at 200 °C for 15 minutes.

The oxygen permeability of the thus obtained heat-treated resin-laminated paper was measured at a temperature of 30 °C and a relative humidity of 80 % RH using an oxygen permeability tester device OXTRAN-2/20 manufactured by Modern Control Co.

The oxygen permeability data obtained in the above Examples 18 - 23 and Comparative Examples 9 - 10 are shown in the following table (Table 3).

TABLE 3

| | Oxygen permeability(cm$^3$/m$^2$ · day · atm, at 30°C, 80% RH) |
|---|---|
| Example 18 | 3.0 |
| Example 19 | 5.0 |
| Example 20 | 3.0 |
| Example 21 | 3.0 |
| Example 22 | 4.0 |
| Example 23 | 3.0 |
| Comp.Ex. 9 | 120 |
| Comp.Ex. 10 | > 400(limit of detection by measuring device) |

As shown in the above Table 3, it was confirmed that the resin-laminated paper according to the present invention was excellent in the oxygen barrier property.

[Example 24]

70 mass parts of 10 mass %-aqueous PAA solution and 30 mass parts of 10 mass % water-soluble starch aqueous solution were mixed with each other, and then sodium hypophosphite mono-hydrate was added to and dissolved in the resultant solution in an amount of 15 mass parts with respect to 100 mass parts of the PAA solid content, thereby to prepare a coating liquid comprising an aqueous solution of sodium hypophosphite and a mixture of PAA and the starch in a ratio of PAA : starch = 70 : 30 (mass % of solid content).

Then, an art paper (basis weight: 100 g/m$^2$, thickness = 120 μm )was used as a paper material, and an adhesive resin of Ad-coat 335 A (curing agent CAT-10, mfd. by Toyo Morton K.K.) was applied onto one surface side of the art paper, thereby to provide a laminate base material having an adhesive resin layer (thickness = 2 μm).

Thereafter, the above-mentioned coating liquid was applied onto the adhesive resin layer of the thus obtained base material layer by using a reverse-roll coater, and then was dried at 110 °C for 20 seconds, thereby to form a shaped product comprising the base material layer and a dried film disposed thereon. Further, the resultant shaped product was caused to contact a heating roller regulated at 230 °C for 37 seconds to effect heat treatment, thereby to prepare a resin-laminated paper comprising the base material layer and a hardly hot water-soluble resin comprising PAA and starch (thickness of hardly hot water-soluble resin layer = 1 μm) disposed on the base material layer.

The oxygen permeability of the thus obtained resin-laminated paper (layer structure: paper material / adhesive resin layer / hardly hot water-soluble resin layer) was measured under at a temperature of 30 °C and a relative humidity of 80 % RH using an oxygen permeability tester device OXTRAN-2/20 manufactured by Modern Control Co.

[Example 25]

3.9 mass parts of sodium hydroxide was added to and dissolved in 70 mass parts of 10 mass %-aqueous PAA solution, thereby to prepare an aqueous solution of the partially neutralized PAA having a neutralization degree of 10

%. Then, the resultant aqueous solution of partially neutralized PAA was mixed with 30 mass parts of 10 mass %-PVA aqueous solution, thereby to prepare a coating liquid of an aqueous solution mixture comprising the partially neutralized PAA and PVA in a ratio of (partially neutralized PAA) : PVA = 70 : 30 (mass ratio of solid content).

Then, the above-mentioned coating liquid was applied onto a polyethylene terephthalate film (PET film, Lumirror S-10 manufactured by Toray K.K., thickness =12 μm) by using a reverse-roll coater, and dried at 110 °C for 20 seconds, thereby to form a shaped product comprising the PET film and a dried film disposed thereon. Then, the resultant shaped product was caused to contact a heating roller regulated at 230 °C for 37 seconds to be heat-treated, thereby to prepare a laminated film comprising the PET film and a hardly hot water-soluble resin layer comprising the PAA partially neutralized product and PVA disposed on the PET film (thickness of the hardly hot water-soluble resin layer = 1 μm).

Then, an art paper (basis weight: 100 $g/m^2$, thickness = 120 μm) was used as a paper material, and an adhesive resin of Ad-coat 335 A (curing agent CAT-10) manufactured by Toyo Morton K.K. was applied onto one surface side of the art paper, thereby to provide a laminate base material having an adhesive layer disposed thereon (thickness =2 μm).

Then, the resultant base material layer and the above-mentioned laminated film were dry-laminated with each other so that the adhesive resin layer of the former contacted the hardly hot water-soluble resin layer of the latter.

The oxygen permeability of the thus obtained resin-laminated paper (layer structure: paper material / adhesive resin layer / hardly hot water-soluble resin layer / PET film layer) was measured in the same manner as in Example 1.

[Example 26]

3.9 mass parts of sodium hydroxide was added to and dissolved in 70 mass parts of 10 mass %-aqueous PAA solution, thereby to prepare an aqueous solution of partially neutralized PAA having a neutralization degree of 10 %. Then, the resultant aqueous solution of the partially neutralized PAA was mixed with 30 mass parts of 10 mass %-aqueous solution of water-soluble starch, thereby to prepare a coating liquid of an aqueous solution mixture comprising the partially neutralized PAA and starch in a ratio of (partially neutralized PAA) : starch = 70 : 30 (mass ratio of solid content).

Then, by use of the above-mentioned coating liquid, a laminated film comprising the PET film and a hardly hot water-soluble resin layer comprising the partially neutralized PAA and starch disposed on the PET film (thickness of the hardly hot water-soluble resin layer = 1 μm) was prepared in the same manner as in Example 25. The thus obtained laminated film and the base material layer used in Example 25 were dry-laminated with each other so that the adhesive resin layer of the base material layer contacted the hardly hot water-soluble resin layer of the laminated film.

The oxygen permeability of the thus obtained resin-laminated paper (layer structure: paper material / adhesive resin layer / hardly hot water-soluble resin layer / PET film layer) was measured in the same manner as in Example 1.

[Example 27]

70 mass parts of 10 mass %-aqueous PAA solution and 30 mass parts of 10 mass % water-soluble starch aqueous solution were mixed with each other, and then sodium hypophosphite mono-hydrate was added to and dissolved in the resultant solution in an amount of 15 mass parts with respect to 100 mass parts of the PAA solid content, thereby to prepare a coating liquid comprising an aqueous solution of sodium hypophosphite and a mixture of PAA and the starch in a ratio of PAA : starch = 70 : 30 (mass ratio of solid content).

Then, by use of the above-mentioned coating liquid, a laminated film comprising the PET film and a hardly hot water-soluble resin layer comprising the partially neutralized PAA and starch disposed on the PET film (thickness of the hardly hot water-soluble resin layer = 1 μm) was prepared in the same manner as in Example 25. The thus obtained laminated film and the base material layer used in Example 25 were dry-laminated with each other so that the adhesive resin layer of the base material layer contacted the hardly hot water-soluble resin layer of the laminated film.

The oxygen permeability of the thus obtained resin-laminated paper (layer structure: paper material / adhesive resin layer / hardly hot water-soluble resin layer / PET film layer) was measured in the same manner as in Example 24.

[Example 28]

70 mass parts of 10 mass %-aqueous PAA solution and 30 mass parts of 10 mass % water-soluble starch aqueous solution were mixed with each other, and then sodium hypophosphite mono-hydrate was added to and dissolved in the resultant solution in an amount of 15 mass parts with respect to 100 mass parts of the PAA solid content, thereby to prepare a coating liquid comprising an aqueous solution of sodium hypophosphite and a mixture of PAA and the starch in a ratio of PAA : starch = 70 : 30 (mass ratio of solid content).

Then, the above-mentioned coating liquid was coated onto a PET film (Lumirror S-10 manufactured by Toray K. K., thickness =12 μm) using a reverse-roll coater, and dried at 110 °C for 20 seconds, thereby to form a shaped product

comprising the PET film and a dried film disposed thereon. Then, the resultant shaped product was caused to contact a heating roller regulated at 230 °C for 37 seconds to be heat-treated, thereby to prepare a laminated film comprising the PET film and the hardly hot water-soluble resin layer comprising the partially neutralized PAA and starch disposed on the PET film (thickness of the hardly hot water-soluble resin layer = 1 μm).

Then, an art paper (basis weight: 100 g/$m^2$, thickness = 120 μm) was used as a paper material, and an adhesive resin of Ad-coat 335 A (curing agent CAT-10) manufactured by Toyo Morton K.K. was applied onto one surface side of the art paper, thereby to provide a laminate base material having an adhesive layer disposed thereon (thickness =2 μm).

Further, a non-stretched polypropylene film (CPP film, Pylene film, manufactured by Toyo Boseki K.K., thickness = 30 μm) was dry-laminated on the adhesive resin layer of the above base material layer. Further, an adhesive resin of Ad-coat 335 A (curing agent CAT-10) manufactured by Toyo Morton K.K. was applied onto the lamination surface side of the above film, thereby to provide a base material on which the CPP film had been laminated.

Then, the resultant CPP-laminated base material layer and the above-mentioned laminated film were dry-laminated with each other so that the adhesive resin layer of the former contacted the hardly hot water-soluble resin layer of the latter.

The oxygen permeability of the thus obtained resin-laminated paper (layer structure: paper material / adhesive resin layer / CPP film layer / adhesive resin layer / hardly hot water-soluble resin layer / PET film layer) was measured in the same manner as in Example 24.

[Example 29]

An adhesive resin of Ad-coat 335 A (curing agent CAT-10) manufactured by Toyo Morton K.K. was applied onto both sides of the resin-laminated paper obtained in Example 27, thereby to effect lamination. Then, a CPP film (Pylene film manufactured by Toyobo K.K., thickness = 30 μm) was further dry-laminated on both sides of the resultant resin-laminated paper.

The oxygen permeability of the thus obtained resin-laminated paper (layer structure: CPP film layer / adhesive resin layer / paper material / adhesive resin layer / hardly hot water-soluble resin layer /PET film layer / adhesive resin layer /CPP film layer) was measured in the same manner as in Example 24 .

[Comparative Example 11 ]

An art paper (basis weight = 100 g /$m^2$, thickness = 120 μm) was used as a paper material, and an adhesive resin of Ad-coat 335 A (curing agent CAT-10) manufactured by Toyo Morton K.K. was applied onto one surface side thereof to form an adhesive layer thereon (thickness =2 μm). Then, a CPP film (Pylene film manufactured by Toyo Boseki K. K., thickness = 30 μm) was dry-laminated on the lamination surface of the above laminate.

The oxygen permeability of the thus obtained resin-laminated paper (layer structure: paper material / adhesive resin layer / CPP film layer) was measured in the same manner as in Example 24.

[Comparative Example 12]

An art paper (basis weight = 100 g /$m^2$, thickness = 120 μm) was used as a paper material, and an adhesive resin of Ad-coat 335 A (curing agent CAT-10) manufactured by Toyo Morton K.K. was applied onto one surface side to form an adhesive resin layer (thickness =2 μm). Then, an ethylene-vinyl alcohol copolymer film (EVOH film, Eval film EF-XL manufactured by Kuraray K.K., thickness = 15 μm) was dry-laminated on the lamination surface of the above laminate.

The oxygen permeability of the thus obtained resin-laminated paper (layer structure: paper material / adhesive resin layer / EVOH film layer) was measured in the same manner as in Example 24.

[Comparative Example 13]

An art paper (basis weight = 100 g /$m^2$, thickness = 120 μm) was used as a paper material, and an adhesive resin of Ad-coat 335 A (curing agent CAT-10) manufactured by Toyo Morton K.K. was applied on one surface side thereof to form an adhesive layer (thickness =2 μm). Then, an ethylene-vinyl alcohol copolymer film (EVOH film, Eval film EF-XL manufactured by Kuraray K.K., thickness = 15 μm) was dry-laminated on the lamination surface of the above laminate.

Further, the application of the adhesive resin on the dry lamination surface, and the dry lamination of the EVOH film were successively repeated in this order, thereby to obtain a resin-laminated paper comprising six laminated layers of EVOH film in total.

The oxygen permeability of the resin-laminated paper of this Comparative Example was made substantially the same as that of the resin-laminated paper of Example by incorporating therein six layers of EVOH film.

The oxygen permeability of the thus obtained resin-laminated paper was measured in the same manner as in Example 24.

The following Table 4 shows the values of oxygen permeability of resin-laminated papers obtained in the above Examples 24 - 29 and Comparative Examples 11-13. Further, the following Table 5 shows the mass per a unit area (g/m$^2$) of the resin-laminated papers obtained in Example 24 and comparative Example 13.

TABLE 4

| measurement item | Examples | | | | | | Comp.Ex. | | |
|---|---|---|---|---|---|---|---|---|---|
| | 24 | 25 | 26 | 27 | 28 | 29 | 11 | 12 | 13 |
| Oxygen permeability | 0.3 | 0.3 | 0.5 | 0.3 | 0.3 | 0.3 | >400 | 3 | 0.5 |

Oxygen permeability: $cm^3/m^2 \cdot day \cdot atm$
30 °C, 80 % RH

(Table 5)

| Measurement item | Example 24 | Comp.Example 13 |
|---|---|---|
| mass per unit area of resin-laminated paper | 105 | 215 |
| (mass per unit area: g/m$^2$) | | |

As shown by the above Table 4, it can be understood that the resin-laminated paper according to the present invention (Examples 24 - 29) have a much better oxygen barrier property as compared with those of conventional products (Comparative Examples 11-12).

Further, as apparent from the above Table 5, the mass per a unit area of the conventional resin-laminated paper (Comparative Example 13) is almost twice of that in the resin-laminated paper according to the present invention, in order to have substantially the same oxygen barrier property as that in the present invention. The resin-laminated paper according to the present invention may provide a high oxygen barrier property even by using a smaller amount of resin, and is advantageous in the reduction in the amount of resin.

As described hereinabove, according to the present invention, there is provided a resin-laminated paper, comprising at least a paper material; and a hardly hot water-soluble resin layer disposed on at least one side of the paper material;

wherein the hardly hot water-soluble resin layer comprises the following Resin A and/or Resin B:

Resin A: a resin mainly comprising at least one poly (meth)acrylic acid type polymer selected from a poly (meth) acrylic acid and a partially neutralized product thereof; and a poly-alcohol type polymer;

Resin B: a resin mainly comprising a poly (meth)acrylic acid and a poly-alcohol type polymer, and further containing a metal in at least a portion thereof.

The above-mentioned resin-laminated paper or a packaging container according to the present invention has an appropriate strength while using a paper material, and may have a high oxygen barrier property which is comparable to such a product incorporating therein an aluminum foil.

The resin-laminated paper or a packaging container according to the present invention also has an advantage such that it can easily be incinerated at the time of the disposal thereof. Further, when the resin-laminated paper or a packaging container according to the present invention is used, the contents of such a resin-laminated paper or a packaging container can be heated by use of a microwave oven, and foreign matter contained in the contents can be detected by use of a metal detector.

From the invention thus described, it will be obvious that the invention may be varied in many ways. Such variations are not to be regarded as departing from the scope of the invention. All such modifications as would be obvious to one skilled in the art are intended to be included within the scope of the claims.

**Claims**

**1.** A resin-laminated paper, comprising at least a paper material; and a hardly hot water-soluble resin layer disposed

on at least one side of the paper material;

wherein the hardly hot water-soluble resin layer comprises the following Resin A and/or Resin B:

Resin A: a resin mainly comprising at least one poly (meth)acrylic acid type polymer selected from a poly (meth)acrylic acid and a partially neutralized product thereof; and a poly-alcohol type polymer;
Resin B: a resin mainly comprising a poly (meth)acrylic acid and a poly-alcohol type polymer, and further containing a metal in at least a portion thereof.

**2.** A resin-laminated paper according to Claim 1, wherein the Resin A is a hardly hot water-soluble resin which comprises at least the following chemical structures (C), (D) and (E) of Chemical Structure 1.

## *CHEMICAL STRUCTURE 1*

chemical structure (C) :

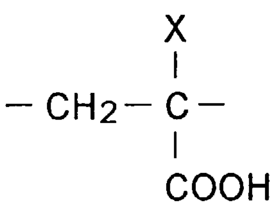

(X denotes H or $CH_3$)

chemical structure (D) :

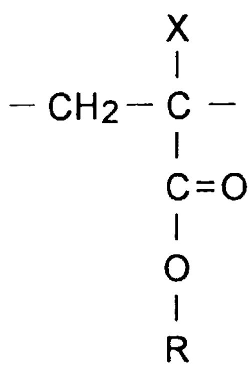

(X denotes H or $CH_3$ , and R denotes a residue of polyalcohol-type polymer from which a hydrogen atom is removed)

chemical structure (E) :

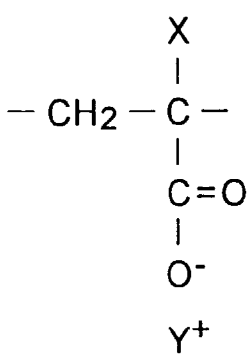

(X denotes H or $CH_3$ , Y denotes alkaline metal ion or ammonium ion)

and has an esterification degree defined by the following equation (1) satisfying a relationship of:

$$0.01 \leq \text{(esterification degree)} \leq 0.5;$$

Equation (1) $$\text{(Esterification degree)} = d/(c + d + e)$$

wherein "c", "d" and "d" respectively denote the molar fractions of the chemical structures (C), (D) and (E) in the resin.

3. A resin-laminated paper according to Claim 1, wherein the Resin B is a hardly hot water-soluble resin which comprises at least the following chemical structures (C'), (D') and (E') in Chemical Structure 2

# CHEMICAL STRUCTURE 2

chemical structure (C'):

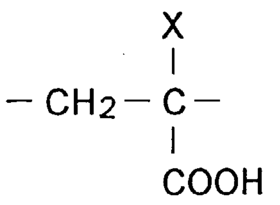

(X denotes H or $CH_3$)

chemical structure (D'):

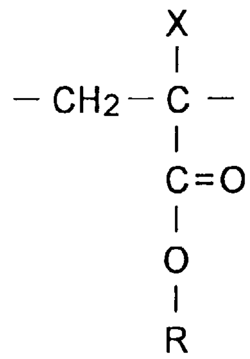

(X denotes H or $CH_3$, and R denotes a residue of polyalcohol-type polymer from which a hydrogen atom is removed)

chemical structure (E'):

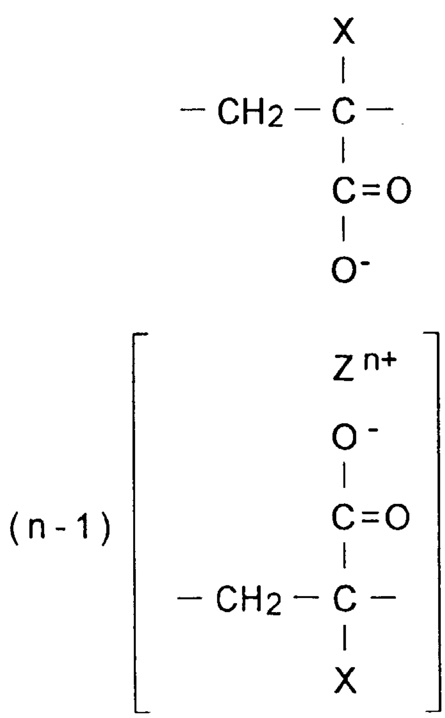

(X denotes H or $CH_3$, $Z^{n+}$ denotes a metal ion having a valence of "n" ⟨n is a positive integer of 2 or more⟩ or more)

and has an esterification degree and an ionization degree respectively defined by the following equations (2) and (3) satisfying relationships of:

$$0.01 \leq \text{(esterification degree)} \leq 0.5$$

$$0.01 \leq \text{(ionization degree)} \leq 0.9$$

Equation (2) $$\text{(esterification degree)} = d'/(c' + d' + n \times e')$$

Equation (3) $$\text{(ionization degree)} = n \times e'/(c' + d' + n \times e')$$

wherein "c'" "d'" and "e'" respectively denote the molar fractions of the chemical structures (C'), (D'), and (E') in the resin.

**4.** A resin-laminated paper according to Claim 1, wherein the hardly hot water-soluble resin layer is disposed so that it contacts the paper material on at least one side thereof.

**5.** A resin-laminated paper according to Claim 1, wherein the hardly hot water-soluble resin layer is disposed on the paper material through the medium of an adhesive resin layer which is disposed so that it contacts the paper material on at least one side thereof.

**6.** A resin-laminated paper according to Claim 5, which comprises the paper material, the adhesive resin layer, the hardly hot water-soluble resin layer, and a thermoplastic resin layer having a crystal melting point or Vicat softening point of 160 °C or higher in the order of: the paper material / adhesive resin layer / hardly hot water-soluble resin layer / thermoplastic resin layer.

**7.** A resin-laminated paper according to Claim 5, which comprises the paper material, the adhesive resin layer, the hardly hot water-soluble resin layer, and a thermoplastic resin layer having a crystal melting point or Vicat softening point of 160 °C or higher in the order of: the paper material / adhesive resin layer / thermoplastic resin layer / hardly hot water-soluble resin layer.

**8.** A resin-laminated paper according to any one of Claims 1-7, wherein the metal contained in Resin B is an alkaline earth metal.

**9.** A resin-laminated paper according to any one of Claims 1-8, wherein the poly-alcohol type polymer is polyvinyl alcohol and/or saccharide.

**10.** A resin-laminated paper according to any one of Claims 1-9, which further comprise an outermost layer disposed on at least one surface side of the resin-laminated paper, the outermost layer comprising a thermoplastic resin having a crystal melting point or Vicat softening point of below 160 °C.

**11.** A packaging container which has been formed using a resin-laminated paper according to any one of Claims 1-10.

Fig.1

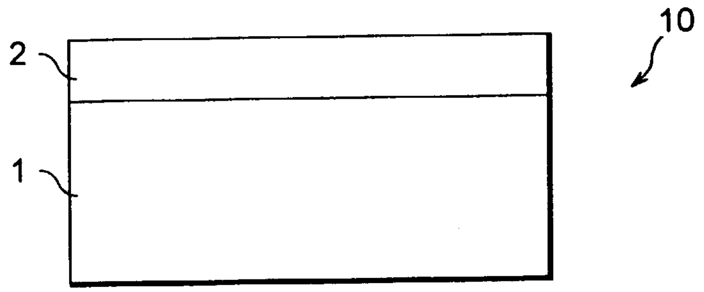


Fig.2

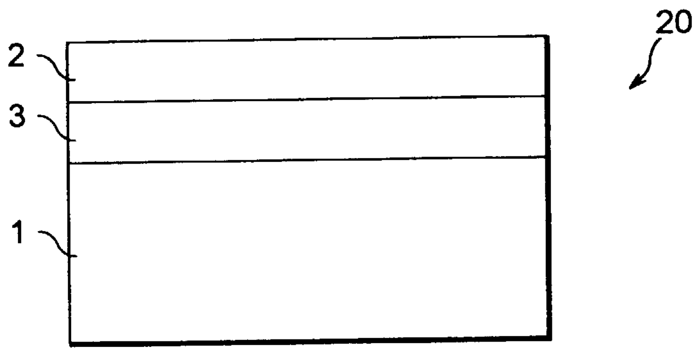


Fig.3

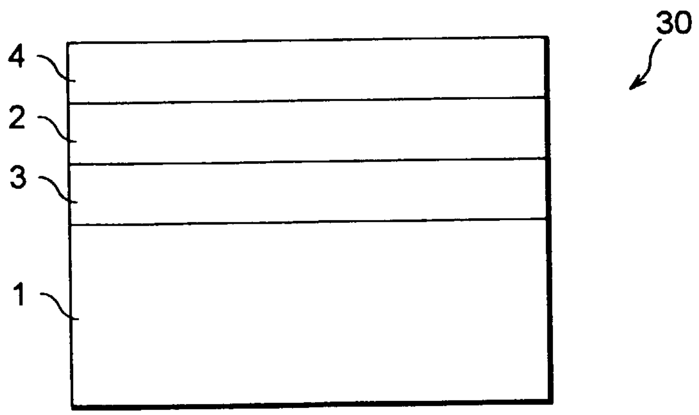

Fig.4

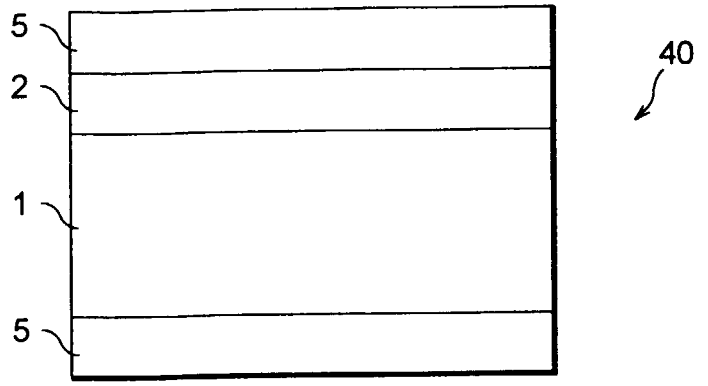


Fig.5

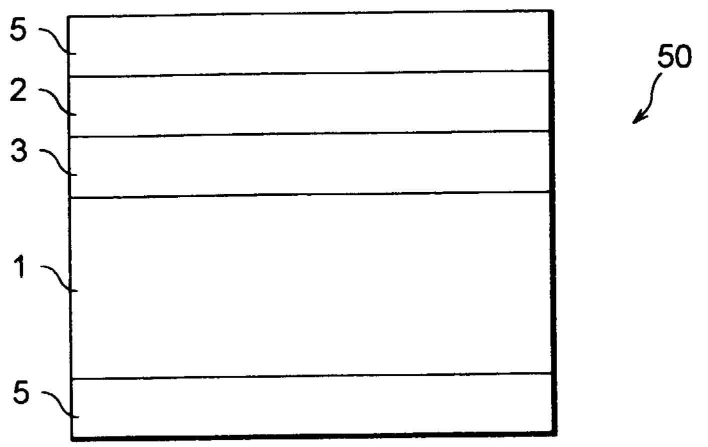


Fig.6

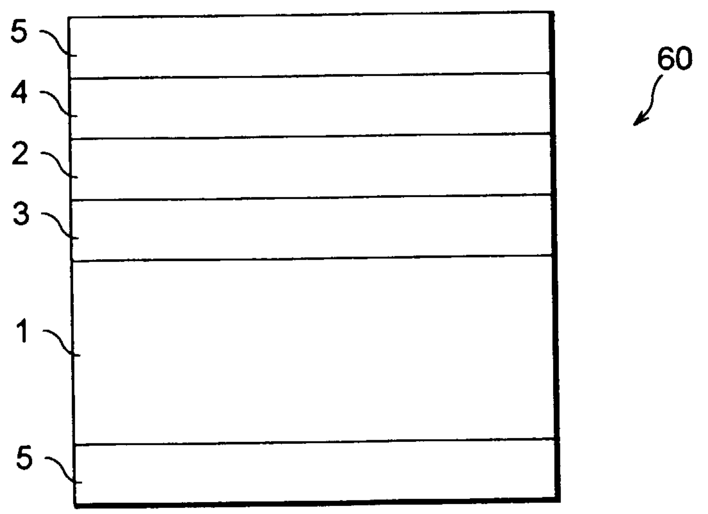

Fig.7

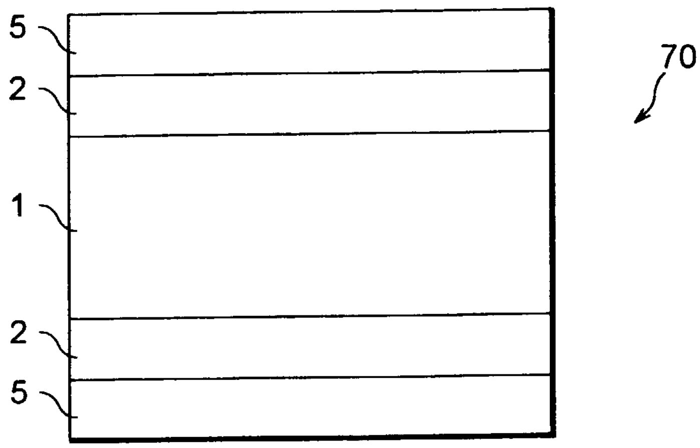


Fig.8

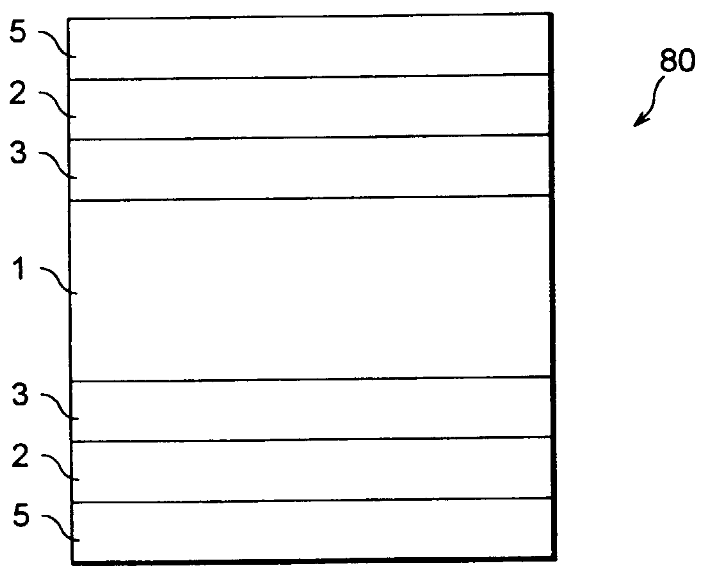

Fig.9

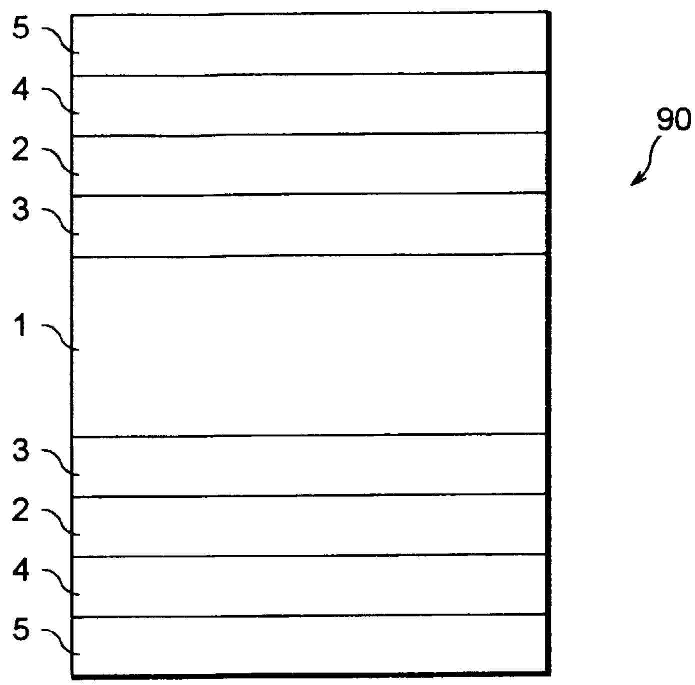

*Fig.10*

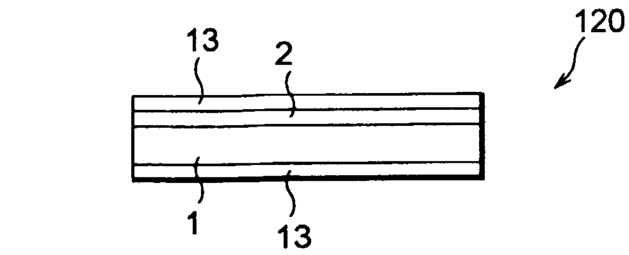


*Fig.11*

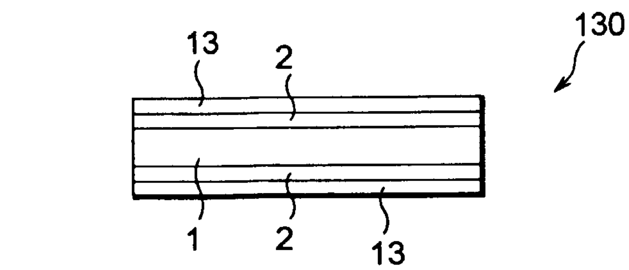


*Fig.12*

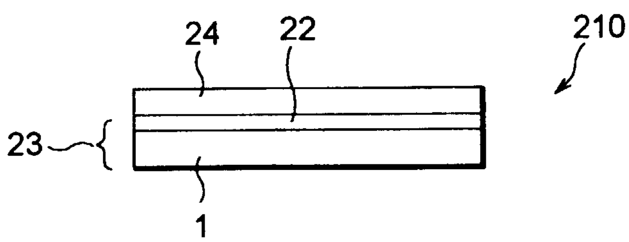


*Fig.13*

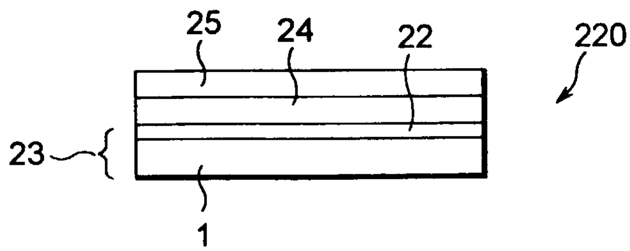


*Fig.14*